(19) Europäisches Patentamt
European Patent Office
Office européen des brevets

(11) **EP 3 992 919 B1**

(12) **EUROPEAN PATENT SPECIFICATION**

(45) Date of publication and mention
of the grant of the patent:
**29.11.2023 Bulletin 2023/48**

(51) International Patent Classification (IPC):
**G06T 17/00** *(2006.01)*     **G06T 7/33** *(2017.01)*
**G06T 7/149** *(2017.01)*

(21) Application number: **20902556.8**

(22) Date of filing: **15.10.2020**

(52) Cooperative Patent Classification (CPC):
**G06T 17/20; G06T 7/149; G06T 7/33;**
G06T 2207/10028; G06T 2207/30201;
G06T 2219/2021

(86) International application number:
**PCT/CN2020/121168**

(87) International publication number:
**WO 2021/120810 (24.06.2021 Gazette 2021/25)**

(54) **THREE-DIMENSIONAL FACIAL MODEL GENERATION METHOD AND APPARATUS, DEVICE, AND MEDIUM**

VERFAHREN UND VORRICHTUNG ZUR ERZEUGUNG EINES DREIDIMENSIONALEN GESICHTSMODELLS, ENTSPRECHENDE VORRICHTUNG UND ENTSPRECHENDES MEDIUM

PROCÉDÉ ET APPAREIL DE GÉNÉRATION DE MODÈLE FACIAL TRIDIMENSIONNEL, DISPOSITIF ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2019 CN 201911296472**

(43) Date of publication of application:
**04.05.2022 Bulletin 2022/18**

(73) Proprietor: **Tencent Technology (Shenzhen) Company Limited**
**Shenzhen, Guangdong, 518057 (CN)**

(72) Inventors:
• **LIN, Xiangkai**
**Shenzhen, GUANGDONG 518057 (CN)**
• **BAO, Linchao**
**Shenzhen, GUANGDONG 518057 (CN)**

(74) Representative: **Eisenführ Speiser Patentanwälte Rechtsanwälte PartGmbB**
**Postfach 10 60 78**
**28060 Bremen (DE)**

(56) References cited:
CN-A- 102 376 100    CN-A- 108 876 893
CN-A- 109 377 563    CN-A- 111 028 343

• DAI HANG ET AL: "Statistical Modeling of Craniofacial Shape and Texture", INTERNATIONAL JOURNAL OF COMPUTER VISION, vol. 128, no. 2, 9 November 2019 (2019-11-09), pages 547-571, XP037015164, DOI: 10.1007/S11263-019-01260-7 [retrieved on 2019-11-09]
• SALAZAR AUGUSTO ET AL: "Fully automatic expression-invariant face correspondence", MACHINE VISION AND APPLICATIONS, SPRINGER VERLAG, DE, vol. 25, no. 4, 16 November 2013 (2013-11-16), pages 859-879, XP035368591, ISSN: 0932-8092, DOI: 10.1007/S00138-013-0579-9 [retrieved on 2013-11-16]

**Description**

This application claims priority to Chinese Patent Application No. 201911296472.5, entitled "THREE-DIMENSIONAL FACIAL MODEL GENERATION METHOD AND APPARATUS, DEVICE, AND MEDIUM" filed on December 16, 2019.

**FIELD**

This application relates to the field of computer vision technologies based on artificial intelligence, and in particular, to a three-dimensional face model generation method and apparatus, a device, and a medium.

**BACKGROUND**

Three-dimensional (3D) face reconstruction refers to reconstructing a 3D face model by using one or more two-dimensional (2D) images.

In the conventional art, three-dimensional face reconstruction is implemented by performing fitting on a three-dimensional face model of a target object obtained from an image and a standard face model in a three-dimensional morphable model (3DMM) library. By using a deformation transfer (DT) technology, a point in low-poly model point cloud (the standard face model) is pulled to a corresponding position in a high-poly model point cloud (the three-dimensional face model of the target object) based on a correspondence of points between the two models. Other points are obtained by performing fitting on smooth items.

The prior art document DAI HANG ET AL: "Statistical Modeling of Craniofacial Shape and Texture" presented a fully-automatic statistical 3D shape modeling approach and apply it to a large dataset of 3D images, the Headspace dataset, thus generating the first public shape-and-texture 3D morphable model (3DMM) of the full human head. The approach is the first to employ a template that adapts to the dataset subject before dense morphing. This is fully automatic and achieved using 2D facial landmarking, projection to 3D shape, and mesh editing. In dense template morphing, it is improved on the well-known Coherent Point Drift algorithm, by incorporating iterative data-sampling and alignment. Evaluations demonstrate that the method has better performance in correspondence accuracy and modeling ability when compared with other competing algorithms. A texture map refinement scheme is proposed to build high quality texture maps and texture model.

Based on the above case, a surface of a three-dimensional face model obtained by performing fitting based on the 3DMM library is not smooth and has a low quality.

**SUMMARY**

A three-dimensional face model generation method and apparatus, a device, and a medium are provided according to embodiments of this application, to improve quality of a three-dimensional face model obtained by fitting. The technical solutions are described as follows.

According to an aspect of this application, a three-dimensional face model generation method is provided, which is executable by a computer device. The method includes:

obtaining an inputted three-dimensional face mesh of a target object;

aligning, based on face keypoints, the three-dimensional face mesh with a first three-dimensional face model of a standard object;

performing fitting on the three-dimensional face mesh and a local area of the first three-dimensional face model, to obtain a second three-dimensional face model by local fitting; and

performing fitting on the three-dimensional face mesh and a global area of the second three-dimensional face model, to obtain a three-dimensional face model of the target object by global fitting,

where the performing fitting on the three-dimensional face mesh and a local area of the first three-dimensional face model, to obtain a second three-dimensional face model by local fitting includes:

performing non-rigid registration on the three-dimensional face mesh and the local area of the first three-dimensional face model, to obtain a first correspondence between the local area and the three-dimensional face mesh;

performing fitting on the three-dimensional face mesh and the local area of the first three-dimensional face model based on the first correspondence, to calculate a first posture parameter of the second three-dimensional face model;

optimizing a shape base coefficient of the first three-dimensional face model based on the first posture parameter, to obtain a shape base coefficient of the second three-dimensional face model;

optimizing an expression base coefficient of the first three-dimensional face model based on the first posture parameter, to obtain an expression base coefficient of the second three-dimensional face model; and

obtaining, based on the first posture parameter, the shape base coefficient, and the expression base coefficient, the second three-dimensional face model by local fitting, or

where the performing fitting on the three-dimensional face mesh and a global area of the second three-dimensional face model, to obtain a three-dimensional face model of the target object by global fitting includes:

performing non-rigid registration on the three-dimensional face mesh and the global area of the second three-dimensional face model, to obtain a second correspondence between the global area and the three-dimensional face mesh;

obtaining a flaw of the second three-dimensional face model, wherein the flaw corresponds to an outlier of the first three-dimensional face model, and the outlier is a point that does not belong to the local area of the first three-dimensional face model;

filtering out the flaw from the second three-dimensional face model, to obtain the second three-dimensional face model that is flawless; and

performing fitting on the three-dimensional face mesh and the global area of the second three-dimensional face model based on the second correspondence, to obtain the three-dimensional face model of the target object by global fitting.

According to another aspect of this application, a three-dimensional face model generation apparatus is provided. The apparatus includes: an obtaining module, a processing module and a fitting module. The obtaining module is configured to obtain an inputted three-dimensional face mesh of a target object. The processing module is configured to align the three-dimensional face mesh with a first three-dimensional face model of a standard object based on face keypoints. The fitting module is configured to perform fitting on the three-dimensional face mesh and a local area of the first three-dimensional face model, to obtain a second three-dimensional face model by local fitting, and perform fitting on the three-dimensional face mesh and a global area of the second three-dimensional face model, to obtain a three-dimensional face model of the target object by global fitting,

where the processing module is further configured to perform non-rigid registration on the three-dimensional face mesh and the local area of the first three-dimensional face model, to obtain a first correspondence between the local area and the three-dimensional face mesh; and

where the apparatus includes a calculating module, configured to: perform fitting on the three-dimensional face mesh and the local area of the first three-dimensional face model based on the first correspondence, to calculate a first posture parameter of the second three-dimensional face model; optimize a shape base coefficient of the first three-dimensional face model based on the first posture parameter, to obtain a shape base coefficient of the second three-dimensional face model; and optimize an expression base coefficient of the first three-dimensional face model based on the first posture parameter, to obtain an expression base coefficient of the second three-dimensional face model, and where

the fitting module is further configured to obtain, based on the first posture parameter, the shape base coefficient, and the expression base coefficient, the second three-dimensional face model by local fitting, or

where the processing module is further configured to perform non-rigid registration on the three-dimensional face mesh and the global area of the second three-dimensional face model, to obtain a second correspondence between the global area and the three-dimensional face mesh; and

the fitting module is further configured to perform fitting on the three-dimensional face mesh and the global area of the second three-dimensional face model based on the second correspondence, to obtain the three-dimensional face model of the target object by global fitting,

where the obtaining module is further configured to obtain a flaw of the second three-dimensional face model, wherein the flaw corresponds to an outlier of the first three-dimensional face model, and the outlier is a point that does not belong to the local area of the first three-dimensional face model; and

the processing module is configured to filter out the flaw from the second three-dimensional face model, to obtain the second three-dimensional face model that is flawless.

According to another aspect of this application, a computer device is provided. The computer device includes a processor and a memory. The memory is configured to store at least one instruction, at least one segment of program, a code set, or an instruction set, and the at least one instruction, the at least one segment of program, the code set, or the instruction set is loaded and executed by the processor to perform the three-dimensional face model generation method according to the foregoing aspects.

According to another aspect of this application, a computer-readable storage medium is provided. The computer-readable storage medium stores at least one instruction, at least one segment of program, a code set, or an instruction set, and the at least one instruction, the at least one segment of program, the code set, or the instruction set is loaded and executed by a processor to perform the three-dimensional face model generation method according to the foregoing aspects.

According to another aspect of embodiments of the present disclosure, a computer program product or a computer program is provided. The computer program product or the computer program includes computer instructions, and the computer instructions are stored in a computer-readable storage medium. A processor of a computer device reads the computer instructions from the computer-readable storage medium, and executes the computer instructions, so that the computer device performs the three-dimensional face model generation method provided in the foregoing optional implementations.

The technical solutions according to the embodiments of this application have at least the following beneficial effects. First, the three-dimensional face mesh is aligned with a first three-dimensional face model of a standard object based on face keypoints. Fitting is performed on the three-dimensional face mesh and a local area of the first three-dimensional face model, to obtain a second three-dimensional face model by local fitting. Then, fitting is performed on the three-dimensional face mesh and a global area of the second three-dimensional face model, to obtain a three-dimensional face model of the target object by global fitting. By performing fitting on the three-dimensional face mesh and the local area of the first three-dimensional face model with a smaller quantity of keypoints, the second three-dimensional face model with a larger quantity of keypoints can be obtained. Fitting is further performed based on the second three-dimensional face model, so that the generated three-dimensional face model of the target object can conform to the target object.

## BRIEF DESCRIPTION OF THE DRAWINGS

To describe the technical solutions in the embodiments of this application more clearly, the drawings required for describing the embodiments are briefly described in the following. Apparently, the drawings in the following description show merely some embodiments of this application, and a person of ordinary skill in the art may still derive other accompanying drawings from these accompanying drawings without creative efforts.

FIG. 1 is a schematic diagram of a bilinear 3DMM library according to an exemplary embodiment of this application;

FIG. 2 is a schematic diagram of a group of expression bases according to an exemplary embodiment of this application;

FIG. 3 is a framework diagram of a procedure in a technical solution according to this application;

FIG. 4 is a schematic diagram of a three-dimensional face model and generated three-dimensional expression bases according to an exemplary embodiment of this application;

FIG. 5 is a flowchart of a three-dimensional face model generation method according to an exemplary embodiment of this application;

FIG. 6 is a schematic diagram of aligning a three-dimensional face mesh with a first three-dimensional face model according to an exemplary embodiment of this application;

FIG. 7 is a flowchart of a three-dimensional face model generation method according to another exemplary embodiment of this application;

FIG. 8 is a schematic diagram of keypoints of a three-dimensional face mesh and keypoints of a first three-dimensional face model according to an exemplary embodiment of this application;

FIG. 9 is a schematic diagram of an area when non-rigid registration is performed on a global area of a second three-dimensional face model obtained by local fitting according to an exemplary embodiment of this application;

FIG. 10 is a flowchart of a three-dimensional face model generation method according to another exemplary embodiment of this application;

FIG. 11 is a schematic diagram of a second three-dimensional face model obtained by local fitting according to an exemplary embodiment of this application;

FIG. 12 is a schematic diagram of flaws of a second three-dimensional face model obtained by local fitting according to an exemplary embodiment of this application;

FIG. 13 is a schematic diagram of flaws of a second three-dimensional face model obtained by local fitting that are determined according to an exemplary embodiment of this application;

FIG. 14 is a flowchart of a three-dimensional face model generation method according to an exemplary embodiment of this application;

FIG. 15 is a flowchart of a voice interaction method according to an exemplary embodiment of this application;

FIG. 16 is a block diagram of a three-dimensional face model generation apparatus according to an exemplary embodiment of this application; and

FIG. 17 is a schematic structural diagram of a computer device according to an exemplary embodiment of this application.

## DESCRIPTION OF EMBODIMENTS

To make objectives, technical solutions, and advantages of this application clearer, embodiments of this application are described in detail with reference to the accompanying drawings in the following.

First, terms involved in the embodiments of this application are introduced.

Artificial Intelligence (AI) refers to a theory, method, technology, and application system that simulates, extends, and expands human intelligence, perceives the environment, obtains knowledge, and uses the knowledge to obtain the best result by using a digital computer or a machine controlled by a digital computer. In other words, Artificial Intelligence represents a comprehensive technology of computer science, which attempts to understand essence of intelligence and produces an intelligent machine that responds in a manner similar to human intelligence. Artificial Intelligence intends to study the design principles and implementation methods of various intelligent machines, to enable the machines to have the functions of perception, reasoning, and decision-making.

The Artificial Intelligence technology involves a comprehensive discipline, and covers a wide range of fields including both a hardware-level technology and a software-level technology. The basic Artificial Intelligence technology generally includes a technology such as a sensor, a dedicated Artificial Intelligence chip, cloud computing, distributed storage, a big data processing technology, an operation/interaction system, or mechatronics. An Artificial Intelligence software technology mainly includes fields such as a CV technology, a speech processing technology, a natural language processing technology, and machine learning/deep learning (DL).

With the research and progress of Artificial Intelligence technologies, the Artificial Intelligence technologies have been researched and applied in many fields such as common smart home, smart wearable device, virtual assistant, smart speaker, smart marketing, unmanned driving, automatic driving, unmanned aerial vehicle, robot, smart medical care, smart customer service, face recognition, and three-dimensional face model reconstruction. It is believed that with the development of technology, the Artificial Intelligence technologies will be applied in more fields and play an increasingly important role.

Solutions provided in the embodiments of this application relate to the field of 3D face reconstruction technologies. Fitting is performed on a three-dimensional face mesh and a standard face model of a standard object, to generate a three-dimensional face model of a target object, and a group of expression bases of the target object are generated based on the three-dimensional face model.

Computer vision (CV) refers to a science technology that studies how to enable a machine to "see". Specifically, the computer vision technology is developed to implement machine vision such as recognition, tracking, measurement, and the like for a target by using a camera and a computer in replacement of human eyes, and further perform graphic processing on the target by a computer to obtain an image suitable for human eyes to observe, or more suitable to be transmitted to an instrument for detection. As a scientific subject, the computer vision technology studies related theories and technologies, and attempts to establish an Artificial Intelligence system that can obtain information from images or multidimensional data. The computer vision technology generally includes technologies such as image processing, image recognition, image semantic understanding, image retrieval, optical character recognition (OCR), video processing, video semantic understanding, video content/behavior recognition, three-dimensional object reconstruction, a 3D technology, virtual reality, augmented reality, synchronous positioning, and map construction, and further include biometric feature recognition technologies such as common face recognition and fingerprint recognition.

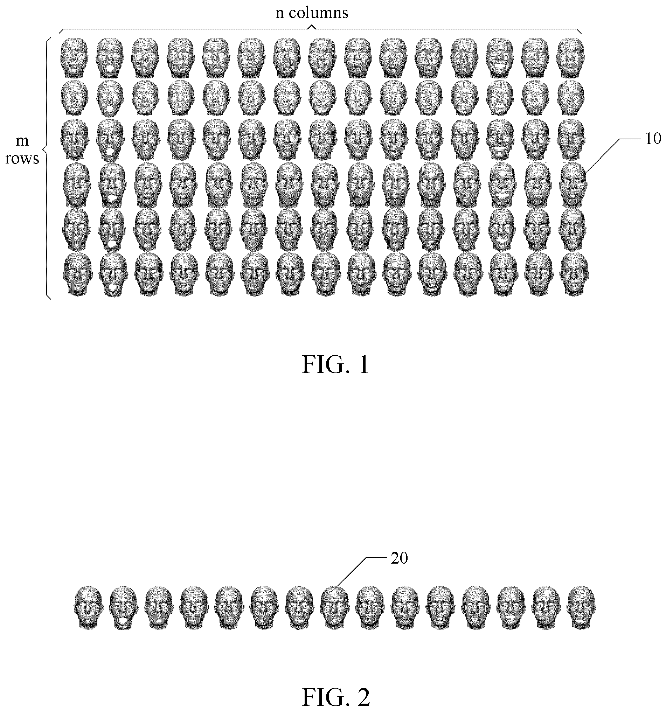

A three-dimensional morphable model (3DMM) library includes two parts: expression bases and shape bases. The 3DMM library is in a linear or bilinear form. FIG. 1 is a schematic diagram of a typical bilinear 3DMM library 10. Each row is for the same person. There are a total of m persons, and therefore there are m rows (m different shapes). Each column in each row corresponds to an expression. There are a total of n expressions, and therefore there are n columns.

Once the 3DMM library shown in FIG. 1 is provided, the 3DMM library may provide a parametric representation for a face of any shape with any expression, as shown in the following equation:

$$M = \exp \times Cr \times id$$

where Cr represents the 3DMM library and has a dimension $n \times k \times m$. k represents a quantity of point clouds of a single face, n represents a quantity of expressions, and m represents a quantity of shape bases (or referred to as a "face reconstruction base"). exp represents an expression coefficient and has a dimension $1 \times n$. id represents a shape coefficient and has a dimension $m \times 1$. n, m, and k are all positive integers.

As can be seen from the equation 1, a parametric representation of any face may be determined as id+exp, where id of a person is fixed. Therefore, a group of expression bases (also referred to as blendshape) dedicated to this person may be derived, as shown in FIG. 2. Apparently, when there are such a group of expression bases 20 of this person, this person may be shown by using an expression coefficient, and a three-dimensional face model of this person with any expression may be generated by changing the expression coefficient.

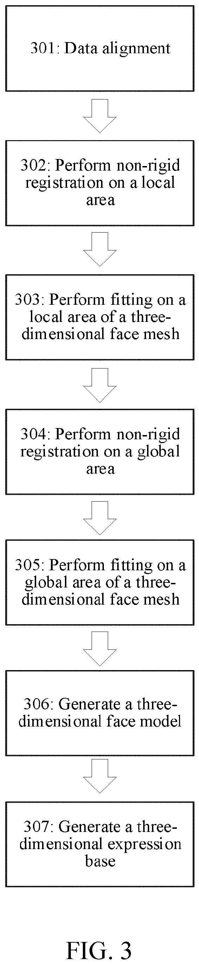

FIG. 3 is a framework diagram of a procedure according to an exemplary embodiment of this application. A method according to the embodiment of this application is applied in a process of generating a three-dimensional face model of a target object and generating a group of expression bases of the target object. The process includes: 301: aligning three-dimensional data of a three-dimensional face mesh with three-dimensional data of a standard face model of a standard object, that is, transforming the three-dimensional face mesh and the standard face model to the same coordinate system; 302: performing non-rigid registration on a local area of the aligned standard face model and a local area of the three-dimensional face mesh; 303: performing, after non-rigid registration, fitting on the local area of the standard face model and the local area of the three-dimensional face mesh; 304: performing non-rigid registration on a global area of a three-dimensional face model obtained by fitting for the first time and a global area of the three-dimensional face mesh; 305: performing, after non-rigid registration, fitting on the global area of the three-dimensional face model and the global area of the three-dimensional face mesh; 306: generating a three-dimensional face model of a target object; and 307: generating a group of three-dimensional expression bases of the target object based on the three-dimensional face model.

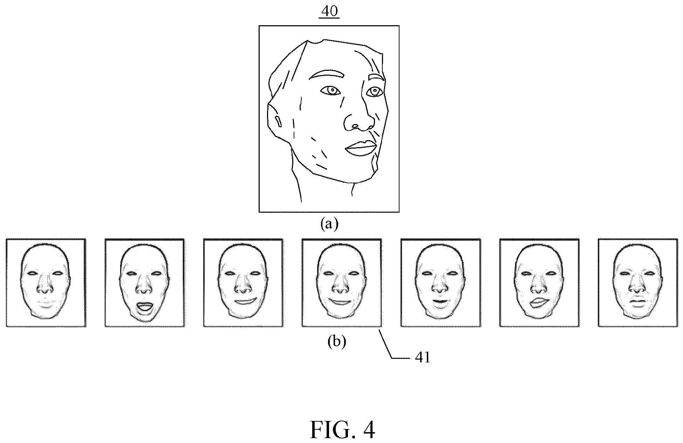

After the group of expression bases of the target object are generated, the group of expression bases may be used to generate a three-dimensional face model of the target object with any expression, so as to perform different product functions. For example, the technical solution in this application may be applied to a scenario such as an augmented reality (AR) expression used in a game or a social application program. In an example, when a user uses an application program that supports three-dimensional face reconstruction in a smartphone, the application program calls a camera of the smartphone to scan the face of the user, generates a three-dimensional face model of the user based on a scanned image, and generates a group of usable three-dimensional expression bases of the user. Switching among three-dimensional face models for different expressions by using the group of expression bases, can perform corresponding functions. As shown in (b) of FIG. 4, a group of expression bases 41 include multiple expressions of a three-dimensional face model.

In the conventional art, fitting performed on the standard face model in the 3DMM library and the three-dimensional face mesh is implemented by using a deformation transfer technology. A group of standard expression bases are generated in the 3DMM library in advance. An inputted face model (that is, the three-dimensional face mesh or a high-poly model, namely, a model with a larger quantity of keypoints) of any topology is aligned with each standard expression base (the standard face model or a low-poly model, namely, a model with a smaller quantity of keypoints), to generate a group of expression bases for the person. In the deformation transfer technology, the standard face model is pulled to correspond positions of the three-dimensional face mesh based on a correspondence, and correspondence of other points of the three-dimensional face mesh with the standard face model is realized by a smoothing operation. In practice, noise of the three-dimensional face mesh is large. As shown in (a) of FIG. 4, the surface of the three-dimensional face mesh 40 is not smooth or has some flaws, the three-dimensional face model of the target object thus generated also has flaws. Especially, complex parts of the target object such as parts of mouth and nose are prone to have flaws, the three-dimensional face model thus generated does not conform to the face of the target object or has distorts. To improve quality of the generated three-dimensional face model, a high-quality correspondence is required in the above process, while the high-quality correspondence needs to be manually calibrated.

A method is provided according to the embodiments of this application. With this method, based on the idea of coarse to fine, non-rigid deformation is combined with vertex fit, after the standard face model is aligned with the three-dimensional face mesh, fitting is performed on the three-dimensional face mesh and a local area of the standard face model once, and then fitting is performed on the three-dimensional face mesh and a global area of the standard face model again, so that expression bases conforming to expressions of the target object may be derived based on the generated three-dimensional face model even in extreme cases.

Steps of the procedure of the method provided in the embodiments of this application may be executed by a terminal such as a mobile phone, a tablet computer, a desktop computer, a notebook computer, a multimedia playback device, or a wearable device, or may be executed by a server. For ease of description, for example, each step is executed by a computer device in method embodiments below. Specifically, the computer device may be any electronic device with a capability of computing and storage, such as a terminal or a server.

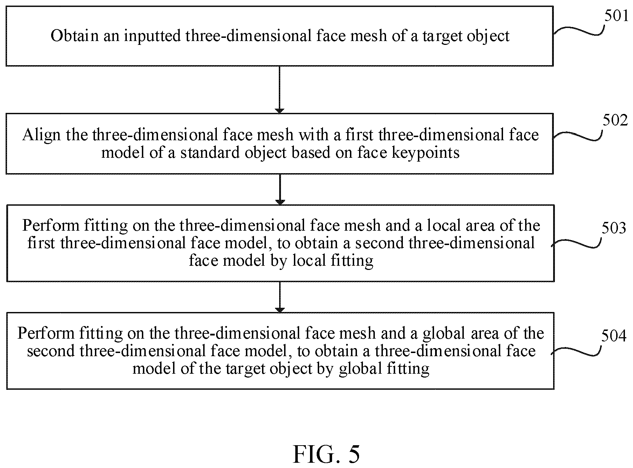

FIG. 5 is a flowchart of a three-dimensional face model generation method according to an exemplary embodiment of this application. The method may be executed by the computer device. The method includes the following steps 501 to 504.

In step 501, an inputted three-dimensional face mesh of a target object is obtained.

The three-dimensional face mesh (Mesh) refers to describing three-dimensional data of a face of the target object by using a set of vertices and polygons of polyhedrons, to simplify a rendering process, where the polygon is at least one of a triangle, a quadrilateral, or other simple convex polygons. In an embodiment, the three-dimensional face mesh may include three-dimensional data of an ordinary polygon with holes, which is not limited in this application. The three-dimensional face mesh is suitable for transformations such as rotation, translation, scaling, and affine transformation. In this embodiment of this application, the three-dimensional face mesh is equivalent to a model with many points (a high-poly model).

In an embodiment, the computer device may capture images of the target object by continuously shooting around the face (or the entire head) of the target object by using an image capturing device. The image capturing device is a device that may shoot a color image and a depth image. Continuous shooting indicates shooting images or videos at a preset frequency. Illustratively, the computer device inputs captured images of the target object into a model to obtain the three-dimensional face mesh of the target object. The model is a machine learning model capable of dividing the three-dimensional face mesh. In an embodiment, the images captured by the computer device include images of the target object from multiple viewing angles such as a front-face posture image, a side-face posture image, a look-up posture image, and an overlook posture image.

In step 502, the three-dimensional face mesh is aligned with a first three-dimensional face model of a standard object based on face keypoints.

The face keypoints are keypoints on the face of the target object. In an embodiment, the face keypoints include at least one of keypoints corresponding to the eyes, a keypoint corresponding to the nose, a keypoint corresponding to the mouth, keypoints corresponding to the eyebrows, and a keypoint corresponding to the chin. In an embodiment, the face keypoints of the three-dimensional face mesh are obtained by using a keypoint detection technology. In an example, the keypoint detection technology may be implemented by inputting the three-dimensional face mesh into a model. The model is a machine learning model that supports detection of coordinates of a keypoint. Illustratively, the model outputs the coordinate of a keypoint on the three-dimensional face mesh.

The first three-dimensional face model is any one of standard three-dimensional face models in a 3DMM library. In this embodiment of this application, a quantity of keypoints of the first three-dimensional face model is less than that of a second three-dimensional face model. The first three-dimensional face model is a model before being fitted with the three-dimensional face mesh.

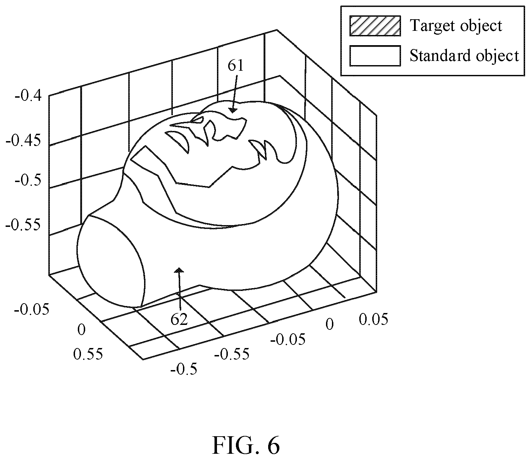

Alignment means transforming the three-dimensional face mesh and the first three-dimensional face model of the standard object to the same rectangular coordinate system. FIG. 6 is a diagram of an effect achieved by aligning the three-dimensional face mesh 61 of the target object with the standard face model 62 (that is, the first three-dimensional face model) of the standard object. Because the three-dimensional face mesh 61 and the standard face model 62 are not exactly the same, the three-dimensional face mesh 61 cannot be completely aligned with the standard face model 62. In step 502, the three-dimensional face mesh 61 is preliminarily aligned with the standard face model 62.

In an embodiment, the computer device may align the three-dimensional face mesh with the first three-dimensional face model based on the face keypoints or based on a coordinate system of one model. For example, if a coordinate system of the first three-dimensional face model is used as the reference, the three-dimensional face mesh of the target object is aligned based on a point or a line in the coordinate system.

In step 503, fitting is performed on the three-dimensional face mesh and a local area of the first three-dimensional face model, to obtain a second three-dimensional face model by local fitting.

The local area is an area for which a fitting error rate is lower than a preset condition. For example, during fitting, since structures of a nose area and a mouth area of the first three-dimensional face model are complex multi-layered structures, and have a fitting error rate higher than the preset condition, the nose area and the mouth area do not belong to the local area of the first three-dimensional face model.

In an example, the second three-dimensional face model by local fitting does not include the nose area and the mouth area, that is, fitting is not performed on the nose area and the mouth area in the second three-dimensional face model by local fitting.

In step 504, fitting is performed on the three-dimensional face mesh and a global area of the second three-dimensional face model, to obtain a three-dimensional face model of the target object by global fitting.

The quantity of keypoints of the second three-dimensional face model is greater than that of the first three-dimensional face model, and the second three-dimensional face model more conform to the three-dimensional face mesh than the first three-dimensional face model. In this embodiment of this application, the second three-dimensional face model is obtained by performing fitting on the three-dimensional face mesh and the local area of the first three-dimensional face model.

In an example, the global area of the second three-dimensional face model includes complex areas including the nose area and the mouth area, that is, the complete three-dimensional face model of the target object is obtained by performing fitting on the second three-dimensional face model.

In summary, with the method in this embodiment, first, the three-dimensional face mesh is aligned with a first three-dimensional face model corresponding to a standard object based on face keypoints. Fitting is performed on the three-dimensional face mesh and a local area of the first three-dimensional face model, to obtain a second three-dimensional face model by local fitting. Then, fitting is performed on the three-dimensional face mesh and a global area of the second three-dimensional face model, to obtain a three-dimensional face model of the target object by global fitting. By performing fitting on the three-dimensional face mesh and the local area of the first three-dimensional face model with a smaller quantity of keypoints, the second three-dimensional face model with a larger quantity of keypoints can be formed. Fitting is further performed on the second three-dimensional face model, so that the generated three-dimensional face model of the target object can conform to the target object.

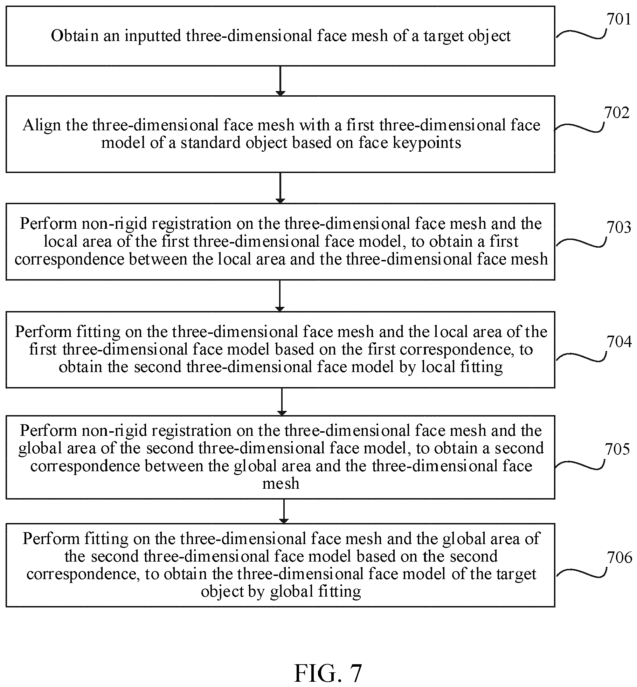

FIG. 7 is a flowchart of a three-dimensional face model generation method according to an exemplary embodiment of this application. The method may be executed by the computer device, and includes the following steps 701 to 706.

In step 701, an inputted three-dimensional face mesh of a target object is obtained.

Step 701 is the same as step 501 shown in FIG. 5, and details are not described herein again.

In step 702, the three-dimensional face mesh is aligned with a first three-dimensional face model of a standard object based on face keypoints.

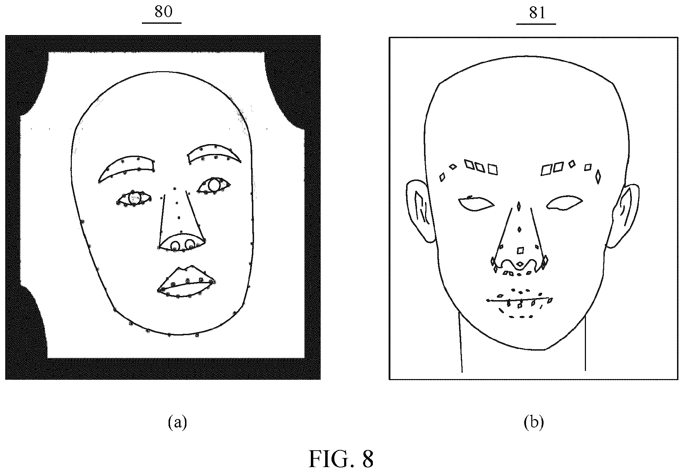

Illustratively, keypoints of the three-dimensional face mesh are detected by using a keypoint detection technology. As shown in (a) of FIG. 8, keypoints are detected on a three-dimensional face mesh 80 of the target object. Illustratively, keypoints of the three-dimensional face mesh 80 include keypoints at parts such as the eyebrows, the eyes, the nose (including the nostrils), the mouth, and the facial contour. As shown in (b) of FIG. 8, keypoints of a first three-dimensional face model 81 are marked in advance.

Because a keypoint of the three-dimensional face mesh and a keypoint of the first three-dimensional face model have the same semanteme, alignment may be performed by using the following equation:

$$M_{low} = S \times (R \times M_{high} + T)$$

where $M_{high}$ represents a three-dimensional point corresponding to a keypoint of the three-dimensional face mesh, $M_{low}$ represents a three-dimensional point corresponding to a keypoint of the first three-dimensional face model, S represents a scaling parameter, R represents a rotation matrix, and T represents a translation parameter. Assuming that there are only three transformations of rotation (R), translation (T), and scaling (S) between the three-dimensional face mesh and the first three-dimensional face model, three variables of rotation, translation, and scaling may be solved by using the equation.

In step 703, non-rigid registration is performed on the three-dimensional face mesh and the local area of the first three-dimensional face model, to obtain a first correspondence between the local area and the three-dimensional face mesh.

In a case of preliminary alignment, non-rigid registration may be performed on the three-dimensional face mesh and the local area of the first three-dimensional face model. Non-rigid registration (also referred to as non-rigid icp or nricp) refers to converting the source model to the target model when a high-poly model is used as a target model and a low-poly model is used as a source model. The first correspondence is a correspondence between a point in the local area of the first three-dimensional face model and a point on the three-dimensional face mesh. In an embodiment, a point of a model is a keypoint or a non-keypoint.

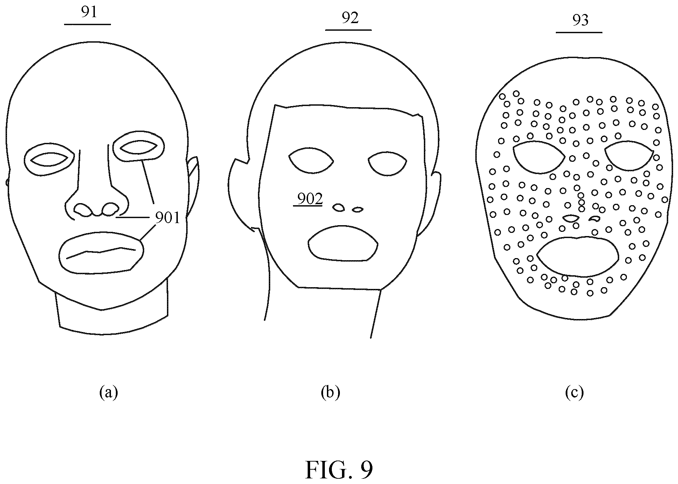

As shown in FIG. 9, (a) of FIG. 9 shows a first three-dimensional face model 91 on which non-rigid registration is not performed. An area 901 does not belong to the local area, that is, the area 901 is an area in which non-rigid registration is not performed. A point in the area 901 is an outlier. Illustratively, the area 91 includes the orbital area, the nostril area, and the mouth area. (b) of FIG. 9 shows a first three-dimensional face model 92 on which rigid registration has been performed. An area 902 is the local area, that is, the area 902 is an area in which non-rigid registration is performed. A point in the area 902 is an inlier. (c) of FIG. 9 shows a first three-dimensional face model 93 on which non-rigid registration has been performed. The first correspondence between an inlier and the three-dimensional face mesh may be determined based on the first three-dimensional face model 93.

In step 704, fitting is performed on the three-dimensional face mesh and the local area of the first three-dimensional face model based on the first correspondence, to obtain the second three-dimensional face model by local fitting.

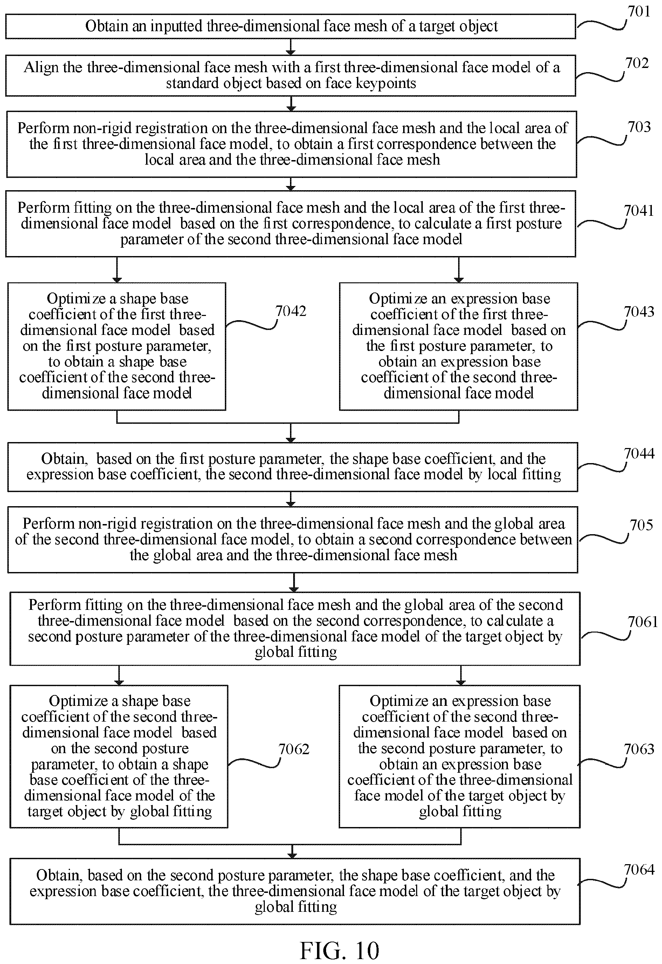

Illustratively, as shown in FIG. 10, step 704 further includes the following step 7041 to step 7044.

In step 7041, fitting is performed on the three-dimensional face mesh and the local area of the first three-dimensional face model based on the first correspondence, to calculate a first posture parameter of the second three-dimensional face model.

The first posture parameter includes at least one of a rotation parameter, a translation parameter, and a scaling parameter. The first posture parameter is solved according to the equation for aligning the three-dimensional face mesh with the first three-dimensional face model. During preliminary alignment, there are fewer corresponding keypoints of the three-dimensional face mesh and the first three-dimensional face model, and more keypoints may be obtained based on the first correspondence. Therefore, the calculated first posture parameter is close to a posture parameter of the three-dimensional face mesh. Illustratively, during preliminary alignment, there are 106 keypoints of the three-dimensional face mesh and the first three-dimensional face model. Several thousands of corresponding keypoints or more are obtained based on the first correspondence.

In step 7042, a shape base coefficient of the first three-dimensional face model is optimized based on the first posture parameter, to obtain a shape base coefficient of the second three-dimensional face model.

An equation for optimizing the shape base coefficient is as follows:

$$f(id) = \min\big(s\big(R[(\exp \times Cr) \times id] + T\big) - M_{high}\big)$$

where a shape base coefficient id is an optimized variable, s, R, and T represent first posture parameters, s represents a scaling parameter, R represents a rotation matrix, T represents a translation parameter, Cr represents a 3DMM library, exp represents an average value of standard face models in the current 3DMM library, and $M_{high}$ represents a three-dimensional point corresponding to a keypoint of the three-dimensional face mesh. The optimized variable corresponds to the first correspondence. A shape base coefficient of the second three-dimensional face model may be solved through Gauss-Newton iteration.

In step 7043, an expression base coefficient of the first three-dimensional face model is optimized based on the first posture parameter, to obtain an expression base coefficient of the second three-dimensional face model.

An equation for optimizing the expression base coefficient is as follows:

$$f(\exp) = \min\big(s\big(R[(id \times Cr) \times \exp] + T\big) - M_{high}\big)$$

where an expression base coefficient exp is an optimized variable, s, R, and T represent first posture parameters, s represents a scaling parameter, R represents a rotation matrix, T represents a translation parameter, Cr represents a 3DMM library, exp represents an average value of standard face models in the current 3DMM library, and $M_{high}$ represents a three-dimensional point corresponding to a keypoint of the three-dimensional face mesh. The optimized variable corresponds to the first correspondence. An expression base coefficient of the second three-dimensional face model may be solved through Gauss-Newton iteration.

In step 7044, the second three-dimensional face model is obtained by local fitting based on the first posture parameter, the shape base coefficient, and the expression base coefficient.

It may be understood that, through iteration of the above equation, the first posture parameter, the shape base coefficient, and the expression base coefficient may be continuously optimized, and the first posture parameter is closer to a posture parameter corresponding to the target object than the rotation parameter solved during the preliminary alignment.

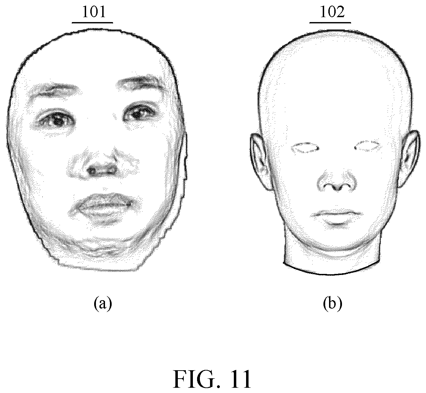

A quantity of keypoints of the obtained second three-dimensional face model that may be used for fitting is greater than that of the first three-dimensional face model, that is, the second three-dimensional face model is more conform to the target object than the first three-dimensional face model. As shown in FIG. 11, (a) of FIG. 11 shows a three-dimensional face mesh 101 of the target object, and (b) of FIG. 11 shows a second three-dimensional face model 102 obtained by local fitting.

In step 705, non-rigid registration is performed on the three-dimensional face mesh and the global area of the second three-dimensional face model, to obtain a second correspondence between the global area and the three-dimensional face mesh.

Based on the second three-dimensional face model and the optimized first posture parameter, shape base coefficient, and expression base coefficient, non-rigid registration may be performed on the second three-dimensional face model and the three-dimensional face mesh to a greater extent. Non-rigid registration is performed on areas, such as the nose area, the mouth area, and the orbital area, of the first three-dimensional face model on which non-rigid registration is not performed.

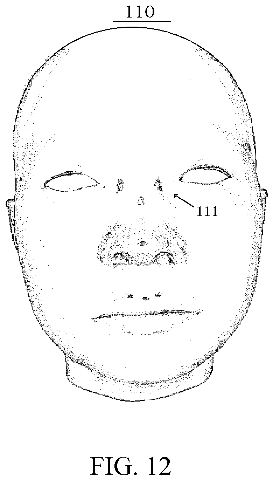

As shown in FIG. 12, the second three-dimensional face model 110 is more conform to the target object than the first three-dimensional face model, and a flaw 111 is generated on the second three-dimensional face model 110. The flaw needs to be filtered out, so as not to affect a next step of fitting.

The flaw are filtered out in the following steps S 1 to S2.

In step S1, a flaw of the second three-dimensional face model, where the flaw corresponds to an outlier of the first three-dimensional face model, and the outlier is a point that does not belong to the local area of the first three-dimensional face model.

A point in the local area of the first three-dimensional face model is an inlier, and the outlier of the first three-dimensional face model is a point that does not belong to the local area of the first three-dimensional face model.

A flaw of the second three-dimensional face model may be obtained in the following sub-steps S11 to S12.

In step S11, a norm of the global area of the second three-dimensional face model is compared with a norm of the second three-dimensional face model obtained by local fitting, to obtain a norm difference.

In step S12, the flaw of the second three-dimensional face model is determined based on the norm difference.

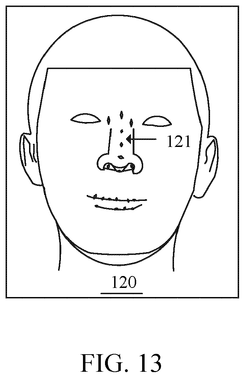

The flaw is generated due to that a topology structure of the second three-dimensional face model obtained by local fitting is inconsistent with that of the three-dimensional face mesh. Therefore, a norm of the flaw is incorrect, and the flaw, that is, an outlier is detected based on the norm. As shown in FIG. 13, a flaw 121 of a second three-dimensional face model 120 is detected based on a norm.

In step S2, the flaw is filtered out from the second three-dimensional face model, to obtain a second three-dimensional face model that is flawless.

In step 706, fitting is performed on the three-dimensional face mesh and the global area of the second three-dimensional face model based on the second correspondence, to obtain the three-dimensional face model of the target object by global fitting.

As shown in FIG. 10, step 706 further includes the following step 7061 to step 7064.

In step 7061, fitting is performed on the three-dimensional face mesh and the global area of the second three-dimensional face model based on the second correspondence, to calculate a second posture parameter of the three-dimensional face model of the target object obtained by global fitting.

A method and an equation used in step 7061 are the same as those in step 7041. The second correspondence includes more correspondences, that is, more points may be used for the fitting process, for example, points in areas such as the nostril area, the mouth area, and the orbital area.

In step 7062, a shape base coefficient of the second three-dimensional face model is optimized based on the second posture parameter, to obtain a shape base coefficient of the three-dimensional face model of the target object obtained by global fitting.

A method and an equation used in step 7062 are the same as those in step 7042. Details are not described herein again.

In step 7063, an expression base coefficient of the second three-dimensional face model is optimized based on the second posture parameter, to obtain an expression base coefficient of the three-dimensional face model of the target object obtained by global fitting.

A method and an equation used in step 7063 are the same as those in step 7043. Details are not described herein again.

In step 7064, the three-dimensional face model of the target object is obtained by global fitting based on the second posture parameter, the shape base coefficient, and the expression base coefficient.

An expression base coefficient and a shape base coefficient of the target object may be obtained based on the three-dimensional face model of the target object obtained by global fitting.

In an embodiment, a shape base coefficient and an expression base coefficient of the three-dimensional face model of the target object obtained by global fitting are obtained; and a three-dimensional expression base of the target object is generated based on the shape base coefficient and the expression base coefficient.

An equation for generating an expression base of the target object is as follows:

$$M = (Cr \times id) \times \exp$$

where Cr represents the 3DMM library and has a dimension n×k×m. k represents a quantity of point cloud of a single face, n represents a quantity of expressions, and m represents a shape base (or referred to as a "pinch face base"). exp represents an expression coefficient and has a dimension 1×n. id represents a shape coefficient and has a dimension m×1. n, m, and k are all positive integers.

When the 3DMM library and the shape base coefficient are constant, for any expression base coefficient, a three-dimensional face mesh of an expression may be obtained. Each dimension of the expression base coefficient is set to 1, so that a group of three-dimensional expression bases may be determined. The group of three-dimensional expression bases are similar to the target object.

It may be understood that, the 3DMM library is in any mode such as a linear mode. The posture parameter, the expression base coefficient, and the shape base coefficient are calculated by using any method. A correspondence between the three-dimensional face mesh and the standard face model in the 3DMM library is obtained by using any method.

In summary, in the method according to this embodiment, the three-dimensional face mesh is aligned with the first three-dimensional face model of the standard object, non-rigid registration is performed on the three-dimensional face mesh and the local area of the first three-dimensional face model to obtain the first correspondence, fitting is performed on the three-dimensional face mesh and the local area of the first three-dimensional face model based on the first correspondence, to obtain the second three-dimensional face model by local fitting, and non-rigid registration and fitting processes are also performed on the three-dimensional face mesh and the second three-dimensional face model, to obtain the three-dimensional face model of the target object by global fitting. By step-by-step fitting, the three-dimensional face model conforms to the three-dimensional face mesh. Therefore, the three-dimensional face model of the target object obtained by global fitting is mor conform to the target object, and the generated three-dimensional expression base is more similar to an expression of the target object.

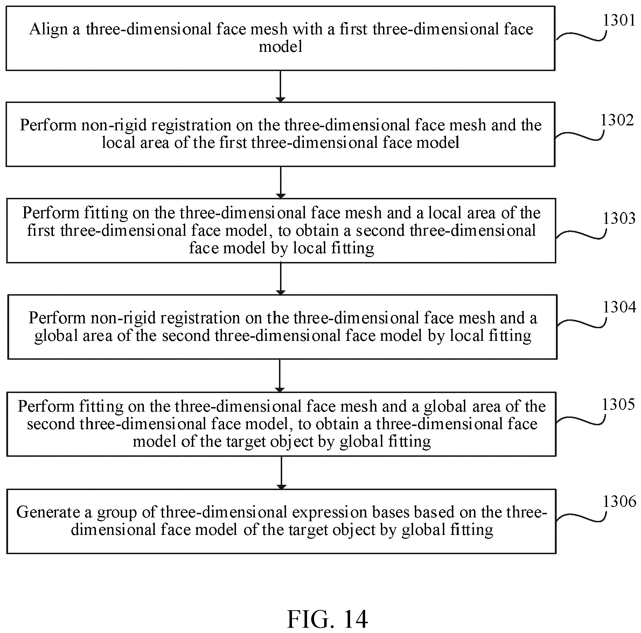

FIG. 14 is a flowchart of a three-dimensional face model generation method according to an exemplary embodiment of this application. The method may be executed by the computer device, and includes the following steps 1301 to 1306.

In step 1301, a three-dimensional face mesh is aligned with a first three-dimensional face model.

The three-dimensional face mesh and the first three-dimensional face model (that is, a standard face model in a 3DMM library) are not located in the same coordinate system, and have completely different center-point positions and sizes. Non-rigid registration cannot be performed directly on the three-dimensional face mesh and the first three-dimensional face model, and the three-dimensional face mesh needs to be preliminarily aligned with the first three-dimensional face model. In an embodiment, a keypoint of the three-dimensional face mesh is detected based on another model or marked in advance, and a keypoint of the first three-dimensional face model is marked in advance. In an embodiment, a first posture parameter of the first three-dimensional face model is solved by using a least square algorithm. The first posture parameter includes at least one of a rotation parameter, a translation parameter, and a scaling parameter. The three-dimensional face mesh and the first three-dimensional face model are converted to the same coordinate system based on the first posture parameter. Based on the fitting idea of course to fine, fitting is performed on a local area of the first three-dimensional face model.

In step 1302, non-rigid registration is performed on the three-dimensional face mesh and the local area of the first three-dimensional face model.

A procedure of non-rigid registration includes the following listed steps.

Course matching step: performing course matching on a source model and a target model.

Inlier matching step: determining a point that is in a corresponding position of the target model and that is closest to an inlier of the source model for matching.

Outlier smoothing step: establishing constraint based on matching in the inlier matching step, and constraining an outlier by smoothing.

Iteration step: iterating the inlier matching step and the outlier smoothing step, and continuously reducing a weight corresponding to a smooth item until reaching convergence.

The non-rigid registration is affected by an initial value (the closest point determined in the inlier matching step). If the initial value is inaccurate (for example, the nose of the three-dimensional face mesh is aligned with the eyes of the first three-dimensional face model), calculation of a shape base coefficient and an expression base coefficient is affected. Besides, because areas such as a nose area and a mouth area of the first three-dimensional face model are complex multi-layered structures, fitting is performed only on an inlier in a local area when non-rigid registration is performed for the first time. The local area is an area in which an error rate is lower than a preset condition. For example, the area does not include the complex areas such as the nose area and the mouth area.

In step 1303, fitting is performed on the three-dimensional face mesh and a local area of the first three-dimensional face model, to obtain a second three-dimensional face model by local fitting.

A procedure of fitting includes the following listed steps.

Initial step: setting an initial shape base coefficient and an initial expression base coefficient to average values in a 3DMM library.

Step for calculating a first posture parameter: calculating the second three-dimensional face model by fixedly using a current shape base coefficient and a current expression base coefficient, and calculating the first posture parameter based on a first correspondence.

Step for optimizing the shape base coefficient: fixing the expression base coefficient, and optimizing the shape base coefficient by using a current first posture parameter.

Step for optimizing the expression base coefficient: fixing the shape base coefficient, and optimizing the expression base coefficient by using a current first posture parameter.

Iteration step: iterating the step for calculating a first posture parameter, the step for optimizing the shape base coefficient, and the step for optimizing the expression base coefficient until reaching convergence.

The second three-dimensional face model obtained in the step is more conform to the face of the target object than the first three-dimensional face model.

In step 1304, non-rigid registration is performed on the three-dimensional face mesh and a global area of the second three-dimensional face model obtained by local fitting.

A correspondence obtained by non-rigid registration is more accurate. Fitting is performed on a standard face model in the 3DMM library based on the correspondence. The standard face model has a shape base coefficient and an expression base coefficient. This is also equivalent to performing fitting on the shape base coefficient and the expression base coefficient based on the correspondence. Therefore, it can be ensured that an outputted three-dimensional face model is a face model of a person even in extreme cases.

After non-rigid registration is performed on the three-dimensional face mesh and the global area of the second three-dimensional face model obtained by local fitting, a norm of the second three-dimensional face model obtained by local fitting is compared with that of the three-dimensional face mesh. Because the second three-dimensional face model obtained by local fitting does not include a damaged area, that is, the norm is accurate, most outliers of the second three-dimensional face model by local fitting may be located by comparing the norms.

In step 1305, fitting is performed on the three-dimensional face mesh and a global area of the second three-dimensional face model, to obtain a three-dimensional face model of the target object by global fitting.

This step is consistent with step 1303, except that a second correspondence used in this step includes more correspondences, for example, correspondences regarding a nostril area, a mouth area, and an orbital area that are lost after performing local fitting.

In step 1306, a group of three-dimensional expression bases are generated based on the three-dimensional face model of the target object obtained by global fitting.

In summary, with the method according to this embodiment, the first three-dimensional face model is first aligned with the three-dimensional face mesh based on the idea of course to fine, non-rigid registration and fitting are then performed on the three-dimensional face mesh and the local area of the first three-dimensional face model, to obtain the second three-dimensional face model that is conform to the face of the target object, non-rigid registration and fitting are then performed on the three-dimensional face mesh and the global area of the second three-dimensional face model, to obtain the three-dimensional face model of the target object by global fitting, and the group of three-dimensional expression bases are generated based on the three-dimensional face model obtained by global fitting. The three-dimensional face model and the three-dimensional expression bases generated based on this method are robust, and are closer to the face and the expression of the target object.

Application to a voice interaction scenario is used as an example below to introduce the technical solutions of this application.

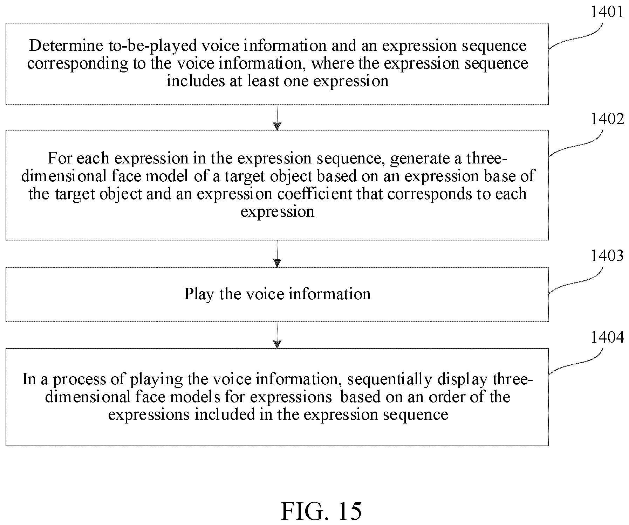

FIG. 15 is a flowchart of a voice interaction method according to an embodiment of this application. This method may be executed by a terminal such as a mobile phone, a tablet computer, or a wearable device. The method may include the following steps 1401 to 1404.

In step 1401, to-be-played voice information and an expression sequence corresponding to the voice information are determined, where the expression sequence includes at least one expression.

A mapping relationship between the voice information and the expression sequence may be stored in advance. In a case that the to-be-played voice information is determined, the expression sequence corresponding to the voice information may be determined based on the mapping relationship. For example, a mapping relationship between each pronunciation and an expression may be stored. In a case that the to-be-played voice information is determined, a pronunciation sequence corresponding to the voice information may be determined. The pronunciation sequence includes at least one pronunciation sequentially sorted. An expression corresponding to each pronunciation may be obtained, to obtain the expression sequence corresponding to the voice information.

In step 1402, for each expression in the expression sequence, a three-dimensional face model of a target object is generated based on an expression base of the target object and an expression coefficient that corresponds to each expression.

Generation of a target expression of the target object is used as an example. A target expression coefficient corresponding to the target expression is determined. Then, a three-dimensional face model of the target object with the target expression is generated based on the target expression coefficient and the group of expression bases of the target object.

In an embodiment, a three-dimensional face model for each expression is rendered by using a texture map of the target object, to obtain a three-dimensional face model with texture for each expression.

In an embodiment, a group of expression bases of the target object are generated in the following manner: photographing image pairs for n head postures of the target object, where each image pair includes an RGB image and a depth image for each head posture, and n is a positive integer; and generating a group of expression bases of the target object based on the n image pairs. For a process of generating the expression bases, refer to descriptions in the foregoing embodiments, which are not repeated in this embodiment.

In step 1403, the voice information is played.

In step 1404, in a process of playing the voice information, three-dimensional face models for expressions are sequentially displayed in an order of the expressions included in the expression sequence.

In an embodiment, in a process of playing the voice information, the three-dimensional face models with texture for the expressions are sequentially displayed in the order of the expressions included in the expression sequence.

In summary, with the technical solution in this embodiment of this application, the expression sequence corresponding to the to-be-played voice information is determined, the three-dimensional face model of the target object with each expression is generated based on the expression base of the target object and the expression coefficient that corresponds to each expression, and in a process of playing the voice information, the three-dimensional face models for the expressions are sequentially displayed in the order of the expressions included in the expression sequence. Therefore, the voice interaction solution based on the model obtained by three-dimensional face reconstruction is implemented, and a matched expression may be displayed based on voice played in real time, which is more vivid.

The following is an apparatus embodiment of this application. For details that are not described in the apparatus embodiment, refer to corresponding records in the foregoing method embodiments. Details are not described herein again.

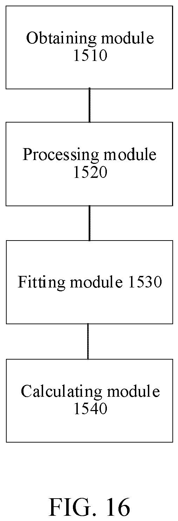

FIG. 16 is a schematic structural diagram of a three-dimensional face model generation apparatus according to an exemplary embodiment of this application. The apparatus may be implemented as the entirety or a part of a terminal through software, hardware, or a combination thereof. The apparatus includes: an obtaining module 1510, a processing module 1520 and a fitting module 1530. The obtaining module 1510 is configured to obtain an inputted three-dimensional face mesh of a target object. The processing module 1520 is configured to align the three-dimensional face mesh with a first three-dimensional face model of a standard object based on face keypoints. The fitting module 1530 is configured to perform fitting on the three-dimensional face mesh and a local area of the first three-dimensional face model, to obtain a second three-dimensional face model by local fitting; and perform fitting on the three-dimensional face mesh and a global area of the second three-dimensional face model, to obtain a three-dimensional face model of the target object by global fitting.

In an embodiment, the processing module 1520 is further configured to perform non-rigid registration on the three-dimensional face mesh and the local area of the first three-dimensional face model, to obtain a first correspondence between the local area and the three-dimensional face mesh. The fitting module 1530 is further configured to perform fitting on the three-dimensional face mesh and the local area of the first three-dimensional face model based on the first correspondence, to obtain the second three-dimensional face model by local fitting.

In an embodiment, the apparatus includes a calculating module 1540. The calculating module 1540 is configured to: perform fitting on the three-dimensional face mesh and the local area of the first three-dimensional face model based on the first correspondence, to calculate a first posture parameter of the second three-dimensional face model; optimize a shape base coefficient of the first three-dimensional face model based on the first posture parameter, to obtain a shape base coefficient of the second three-dimensional face model; and optimize an expression base coefficient of the first three-dimensional face model based on the first posture parameter, to obtain an expression base coefficient of the second three-dimensional face model. The fitting module 1530 is further configured to obtain, based on the first posture parameter, the shape base coefficient, and the expression base coefficient, the second three-dimensional face model by local fitting.

In an embodiment, the processing module 1520 is further configured to perform non-rigid registration on the three-dimensional face mesh and the global area of the second three-dimensional face model, to obtain a second correspondence between the global area and the three-dimensional face mesh. The fitting module 1530 is further configured to perform fitting on the three-dimensional face mesh and the global area of the second three-dimensional face model based on the second correspondence, to obtain the three-dimensional face model of the target object by global fitting.

In an embodiment, the calculating module 1540 is further configured to: perform fitting on the three-dimensional face mesh and the global area of the second three-dimensional face model based on the second correspondence, to calculate a second posture parameter of the three-dimensional face model of the target object by global fitting; optimize a shape base coefficient of the second three-dimensional face model based on the second posture parameter, to obtain a shape base coefficient of the three-dimensional face model of the target object by global fitting; and optimize an expression base coefficient of the second three-dimensional face model based on the second posture parameter, to obtain an expression base coefficient of the three-dimensional face model of the target object by global fitting. The fitting module 1530 is further configured to obtain, based on the second posture parameter, the shape base coefficient, and the expression base coefficient, the three-dimensional face model of the target object by global fitting.

In an embodiment, the obtaining module 1510 is further configured to obtain a flaw of the second three-dimensional face model, where the flaw corresponds to an outlier of the first three-dimensional face model, and the outlier is a point that does not belong to the local area of the first three-dimensional face model. The processing module 1520 is further configured to filter out the flaw from the second three-dimensional face model, to obtain a second three-dimensional face model that is flawless.

In an embodiment, the processing module 1520 is further configured to: compare a norm of the global area of the second three-dimensional face model with a norm of the second three-dimensional face model by local fitting, to obtain a norm difference; and determine the flaw of the second three-dimensional face model based on the norm difference.

In an embodiment, the obtaining module 1510 is further configured to obtain a shape base coefficient and an expression base coefficient of the three-dimensional face model of the target object by global fitting. The processing module 1520 is further configured to generate a three-dimensional expression base of the target object based on the shape base coefficient and the expression base coefficient.

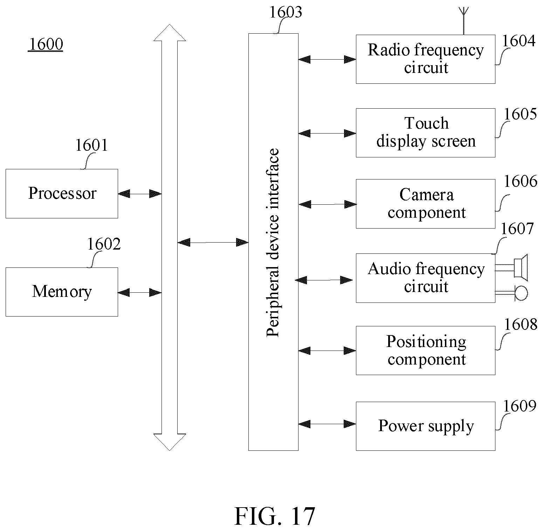

FIG. 17 is a structural block diagram of a terminal 1600 according to an embodiment of this application. The terminal 1600 may be an electronic device such as a mobile phone, a tablet computer, a wearable device, a multimedia playback device, and a camera.

Generally, the terminal 1600 includes a processor 1601 and a memory 1602.

The processor 1601 may include one or more processing cores. For example, the processor 1601 may be a 4-core processor or a 16-core processor. The processor 1601 may be implemented by using at least one hardware form of a digital signal processor (DSP), a field programmable gate array (FPGA), and a programmable logic array (PLA). The processor 1601 may alternatively include a main processor and a coprocessor. The main processor is a processor that is configured to process data in an awake state, also referred to as a central processing unit (CPU), and the coprocessor is a low-power processor that is configured to process data in an idle state. In some embodiments, the processor 1601 may be integrated with a graphics processing unit (GPU). The GPU is configured to render and draw content that needs to be displayed on a display. In some embodiments, the processor 1601 may further include an artificial intelligence (AI) processor. The AI processor is configured to process a computing operation related to machine learning.

The memory 1602 may include one or more computer-readable storage medium. The computer-readable storage medium may be non-transient. The memory 1602 may further include a high-speed random access memory, and a non-volatile memory such as one or more magnetic disk storage devices and a flash memory device. In some embodiments, a non-transient computer-readable storage medium in the memory 1602 is configured to store at least one instruction, at least one segment of program, a code set, or an instruction set. The at least one instruction, the at least one segment of program, the code set, or the instruction set is loaded and executed by the processor 1601 to perform the three-dimensional face model generation method or the voice interaction method provided in the method embodiments of this application.

In some embodiments, the terminal 1600 may alternatively include: a peripheral device interface 1603 and at least one peripheral device. The processor 1601, the memory 1602, and the peripheral device interface 1603 may be connected through a bus or a signal cable. Each peripheral device may be connected to the peripheral device interface 1603 through a bus, a signal cable, or a circuit board. Specifically, the peripheral device may include: at least one of a radio frequency circuit 1604, a touch display screen 1605, a camera component 1606, an audio circuit 1607, a positioning component 1608, and a power supply 1609.

The camera 1606 may be a three-dimensional camera formed by a color camera and a depth camera.

A person skilled in the art may understand that a structure shown in FIG. 17 constitutes no limitation on the terminal 1600, and the terminal may include more or fewer components than those shown in the figure, or combine some components, or use a different component deployment.

In an exemplary embodiment, a computer-readable storage medium is further provided, the storage medium storing at least one instruction, at least one program, a code set or an instruction set, and the at least one instruction, the at least one program, the code set or the instruction set being executed by the processor of a computer device to implement the foregoing three-dimensional face model generation method.

In an embodiment, the computer-readable storage medium may include: a ROM, a RAM, a solid state drive (SSD), an optical disc, or the like. The random access memory may include a resistance random access memory (ReRAM) and a dynamic random access memory (DRAM).

According to another aspect of the embodiments of this application, a computer program product or a computer program is provided, the computer program product or the computer program including computer instructions, the computer instructions being stored in a computer-readable storage medium. A processor of a computer device reads the computer instructions from the computer-readable storage medium, and executes the computer instructions, so that the computer device performs the three-dimensional face model generation method provided in the foregoing optional implementations.

It is to be noted that "multiple" mentioned in the specification means two or more. "And/or" describes an association relationship for associated objects and represents that there are three relationships. For example, A and/or B may represent the following three cases: only A exists, both A and B exist, and only B exists. The character "/" in this specification generally indicates an "or" relationship between the associated objects.

A person of ordinary skill in the art may understand that all or some of the steps of the foregoing embodiments may be implemented by using hardware, or may be implemented by a program instructing relevant hardware. The program may be stored in a computer-readable storage medium. The storage medium may be a ROM, a magnetic disk, an optical disc, or the like.

**Claims**

1. A three-dimensional face model generation method, executable by a computer device, the method comprising:

    obtaining (501, 701) an inputted three-dimensional face mesh of a target object;
    aligning (502, 702), based on face keypoints, the three-dimensional face mesh with a first three-dimensional face model of a standard object;
    performing fitting (503) on the three-dimensional face mesh and a local area of the first three-dimensional face model, to obtain a second three-dimensional face model by local fitting; and
    performing fitting (504) on the three-dimensional face mesh and a global area of the second three-dimensional face model, to obtain a three-dimensional face model of the target object by global fitting,
    wherein the performing fitting on the three-dimensional face mesh and a local area of the first three-dimensional face model, to obtain a second three-dimensional face model by local fitting comprises:

        performing non-rigid registration (703) on the three-dimensional face mesh and the local area of the first three-dimensional face model, to obtain a first correspondence between the local area and the three-dimensional face mesh;
        performing fitting (7041) on the three-dimensional face mesh and the local area of the first three-dimensional face model based on the first correspondence, to calculate a first posture parameter of the second three-dimensional face model;
        optimizing (7042) a shape base coefficient of the first three-dimensional face model based on the first posture parameter, to obtain a shape base coefficient of the second three-dimensional face model;
        optimizing (7043) an expression base coefficient of the first three-dimensional face model based on the first posture parameter, to obtain an expression base coefficient of the second three-dimensional face model; and
        obtaining (7044), based on the first posture parameter, the shape base coefficient, and the expression base coefficient, the second three-dimensional face model by local fitting, or

wherein the performing fitting on the three-dimensional face mesh and a global area of the second three-dimensional face model, to obtain a three-dimensional face model of the target object by global fitting comprises:

performing non-rigid registration (705) on the three-dimensional face mesh and the global area of the second three-dimensional face model, to obtain a second correspondence between the global area and the three-dimensional face mesh;

obtaining a flaw of the second three-dimensional face model, wherein the flaw corresponds to an outlier of the first three-dimensional face model, and the outlier is a point that does not belong to the local area of the first three-dimensional face model;

filtering out the flaw from the second three-dimensional face model, to obtain the second three-dimensional face model that is flawless; and

performing fitting on the three-dimensional face mesh and the global area of the second three-dimensional face model based on the second correspondence, to obtain the three-dimensional face model of the target object by global fitting.

2. The method according to claim 1, wherein the performing fitting on the three-dimensional face mesh and the global area of the second three-dimensional face model based on the second correspondence, to obtain the three-dimensional face model of the target object by global fitting comprises:

performing fitting (7061) on the three-dimensional face mesh and the global area of the second three-dimensional face model based on the second correspondence, to calculate a second posture parameter of the three-dimensional face model of the target object obtained by global fitting;

optimizing (7062) a shape base coefficient of the second three-dimensional face model based on the second posture parameter, to obtain a shape base coefficient of the three-dimensional face model of the target object obtained by global fitting;

optimizing (7063) an expression base coefficient of the second three-dimensional face model based on the second posture parameter, to obtain an expression base coefficient of the three-dimensional face model of the target object obtained by global fitting; and

obtaining (7064), based on the second posture parameter, the shape base coefficient, and the expression base coefficient, the three-dimensional face model of the target object by global fitting.

3. The method according to claim 1, wherein the obtaining a flaw of the second three-dimensional face model comprises:

comparing a norm of the global area of the second three-dimensional face model with a norm of the second three-dimensional face model obtained by local fitting, to obtain a norm difference; and

determining the flaw of the second three-dimensional face model based on the norm difference.

4. The method according to any one of claims 1 to 3, wherein the method further comprises:

obtaining a shape base coefficient and an expression base coefficient of the three-dimensional face model of the target object obtained by global fitting; and

generating a three-dimensional expression base of the target object based on the shape base coefficient and the expression base coefficient.

5. A three-dimensional face model generation apparatus, comprising:

an obtaining module (1510), configured to obtain an inputted three-dimensional face mesh of a target object;

a processing module (1520), configured to align the three-dimensional face mesh with a first three-dimensional face model of a standard object based on face keypoints; and

a fitting module (1530), configured to perform fitting on the three-dimensional face mesh and a local area of the first three-dimensional face model, to obtain a second three-dimensional face model by local fitting, and perform fitting on the three-dimensional face mesh and a global area of the second three-dimensional face model, to obtain a three-dimensional face model of the target object by global fitting,

wherein the processing module is further configured to perform non-rigid registration on the three-dimensional face mesh and the local area of the first three-dimensional face model, to obtain a first correspondence between the local area and the three-dimensional face mesh; and

wherein the apparatus comprises a calculating module, configured to: perform fitting on the three-dimensional face mesh and the local area of the first three-dimensional face model based on the first correspondence, to calculate a first posture parameter of the second three-dimensional face model; optimize a shape base coefficient of the first three-dimensional face model based on the first posture parameter, to obtain a shape base coefficient of the second three-dimensional face model; and optimize an expression base coefficient of the first three-dimensional face model based on the first posture parameter, to obtain an expression base coefficient of the second three-dimensional face model, and wherein

the fitting module is further configured to obtain, based on the first posture parameter, the shape base coefficient, and the expression base coefficient, the second three-dimensional face model by local fitting, or

wherein the processing module is further configured to perform non-rigid registration on the three-dimensional face mesh and the global area of the second three-dimensional face model, to obtain a second correspondence between the global area and the three-dimensional face mesh; and

the fitting module is further configured to perform fitting on the three-dimensional face mesh and the global area of the second three-dimensional face model based on the second correspondence, to obtain the three-dimensional face model of the target object by global fitting,

wherein the obtaining module is further configured to obtain a flaw of the second three-dimensional face model, wherein the flaw corresponds to an outlier of the first three-dimensional face model, and the outlier is a point that does not belong to the local area of the first three-dimensional face model; and

the processing module is configured to filter out the flaw from the second three-dimensional face model, to obtain the second three-dimensional face model that is flawless.

6. The apparatus according to claim 5, wherein the calculating module is further configured to: perform fitting on the three-dimensional face mesh and the global area of the second three-dimensional face model based on the second correspondence, to calculate a second posture parameter of the three-dimensional face model of the target object obtained by global fitting; optimize a shape base coefficient of the second three-dimensional face model based on the second posture parameter, to obtain a shape base coefficient of the three-dimensional face model of the target object obtained by global fitting; optimize an expression base coefficient of the second three-dimensional face model based on the second posture parameter, to obtain an expression base coefficient of the three-dimensional face model of the target object obtained by global fitting, and wherein

the fitting module is further configured to obtain, based on the second posture parameter, the shape base coefficient, and the expression base coefficient, the three-dimensional face model of the target object by global fitting.

7. A computer device, comprising a processor and a memory, wherein

the memory is configured to store at least one instruction, at least one segment of program, a code set, or an instruction set, and the instruction, and the program, the code set, or the instruction set are loaded and executed by the processor to perform the three-dimensional face model generation method according to any one of claims 1 to 4.

8. A computer-readable storage medium, storing at least one instruction, at least one segment of program, a code set, or an instruction set, and the at least one instruction, wherein the at least one segment of program, the code set, or the instruction set are loaded and executed by a processor to perform the three-dimensional face model generation method according to any one of claims 1 to 4.

**Patentansprüche**

1. Verfahren zur Erzeugung eines dreidimensionalen Gesichtsmodells, ausführbar durch eine Computervorrichtung, wobei das Verfahren umfasst:

Erhalten (501, 701) eines eingegebenen dreidimensionalen Flächennetzes eines Zielobjekts;

Ausrichten (502, 702) des dreidimensionalen Flächennetzes mit einem ersten dreidimensionalen Flächenmodell eines Standardobjekts auf der Grundlage von Flächen-Keypoints;

Durchführen einer Anpassung (503) an dem dreidimensionalen Flächennetz und einem lokalen Bereich des ersten dreidimensionalen Flächenmodells, um ein zweites dreidimensionales Flächenmodell durch lokale Anpassung zu erhalten; und

Durchführen einer Anpassung (504) an dem dreidimensionalen Flächennetz und einem globalen Bereich des zweiten dreidimensionalen Flächenmodells, um ein dreidimensionales Flächenmodell des Zielobjekts durch globale Anpassung zu erhalten,

wobei die Durchführung der Anpassung an dem dreidimensionalen Flächennetz und einem lokalen Bereich des ersten dreidimensionalen Flächenmodells, um ein zweites dreidimensionales Flächenmodell durch lokale Anpassung zu erhalten, umfasst:

Durchführen einer nicht-starren Registrierung (703) an dem dreidimensionalen Flächennetz und dem lokalen Bereich des ersten dreidimensionalen Flächenmodells, um eine erste Übereinstimmung zwischen dem lokalen Bereich und dem dreidimensionalen Flächennetz zu erhalten;

Durchführen einer Anpassung (7041) des dreidimensionalen Flächennetzes und des lokalen Bereichs des ersten dreidimensionalen Flächenmodells auf der Grundlage der ersten Korrespondenz, um einen ersten Haltungsparameter des zweiten dreidimensionalen Flächenmodells zu berechnen;

Optimieren (7042) eines Form-Basiskoeffizienten des ersten dreidimensionalen Flächenmodells basierend auf dem ersten Haltungsparameter, um einen Form-Basiskoeffizienten des zweiten dreidimensionalen Flächenmodells zu erhalten;

Optimieren (7043) eines Ausdrucksbasiskoeffizienten des ersten dreidimensionalen Flächenmodells basierend auf dem ersten Haltungsparameter, um einen Ausdrucksbasiskoeffizienten des zweiten dreidimensionalen Flächenmodells zu erhalten; und

Ermitteln (7044) des zweiten dreidimensionalen Flächenmodells auf der Grundlage des ersten Haltungsparameters, des Form-Basiskoeffizienten und des Ausdruck-Basiskoeffizienten durch lokale Anpassung, oder

wobei die Durchführung der Anpassung an dem dreidimensionalen Flächennetz und einem globalen Bereich des zweiten dreidimensionalen Flächenmodells, um ein dreidimensionales Flächenmodell des Zielobjekts durch globale Anpassung zu erhalten, umfasst:

Durchführen einer nicht-starren Registrierung (705) des dreidimensionalen Flächennetzes und der globalen Fläche des zweiten dreidimensionalen Flächenmodells, um eine zweite Entsprechung zwischen der globalen Fläche und dem dreidimensionalen Flächennetz zu erhalten;

Ermitteln eines Fehlers des zweiten dreidimensionalen Flächenmodells, wobei der Fehler einem Ausreißer des ersten dreidimensionalen Flächenmodells entspricht und der Ausreißer ein Punkt ist, der nicht zu dem lokalen Bereich des ersten dreidimensionalen Flächenmodells gehört;

Herausfiltern des Fehlers aus dem zweiten dreidimensionalen Flächenmodell, um das zweite dreidimensionale Flächenmodell zu erhalten, das fehlerfrei ist; und

Durchführen einer Anpassung des dreidimensionalen Flächennetzes und des globalen Bereichs des zweiten dreidimensionalen Flächenmodells auf der Grundlage der zweiten Korrespondenz, um das dreidimensionale Flächenmodell des Zielobjekts durch globale Anpassung zu erhalten.

2. Verfahren nach Anspruch 1, wobei die Durchführung der Anpassung an dem dreidimensionalen Flächennetz und dem globalen Bereich des zweiten dreidimensionalen Flächenmodells auf der Grundlage der zweiten Übereinstimmung erfolgt, um das dreidimensionale Flächenmodell des Zielobjekts durch globale Anpassung zu erzielen, umfassend:

Durchführen einer Anpassung (7061) des dreidimensionalen Flächennetzes und der globalen Fläche des zweiten dreidimensionalen Flächenmodells auf der Grundlage der zweiten Korrespondenz, um einen zweiten Haltungsparameter des dreidimensionalen Flächenmodells des Zielobjekts zu berechnen, der durch globale Anpassung erhalten wurde;

Optimieren (7062) eines Form-Basiskoeffizienten des zweiten dreidimensionalen Flächenmodells auf der Grundlage des zweiten Haltungsparameters, um einen Form-Basiskoeffizienten des dreidimensionalen Flächenmodells des Zielobjekts zu erhalten, der durch globale Anpassung erhalten wird;

Optimieren (7063) eines Ausdrucksbasiskoeffizienten des zweiten dreidimensionalen Flächenmodells auf der Grundlage des zweiten Haltungsparameters, um einen Ausdrucksbasiskoeffizienten des dreidimensionalen Flächenmodells des Zielobjekts zu erhalten, der durch globale Anpassung erhalten wird; und

Ermitteln (7064) des dreidimensionalen Flächenmodells des Zielobjekts auf der Grundlage des zweiten Haltungsparameters, des Form-Basiskoeffizienten und des Ausdruck-Basiskoeffizienten durch globale Anpassung.

3. Verfahren nach Anspruch 1, wobei das Ermitteln eines Fehlers des zweiten dreidimensionalen Flächenmodells umfasst:

Vergleichen einer Norm der globalen Fläche des zweiten dreidimensionalen Flächenmodells mit einer Norm des zweiten dreidimensionalen Flächenmodells, die durch lokale Anpassung erhalten wurde, um eine Normdifferenz zu erhalten; und

Bestimmung des Fehlers des zweiten dreidimensionalen Flächenmodells auf der Grundlage der Normdifferenz.

4. Verfahren nach einem der Ansprüche 1 bis 3, wobei das Verfahren ferner umfasst:

Erhalten eines Form-Basiskoeffizienten und eines Ausdruck-Basiskoeffizienten des dreidimensionalen Flächenmodells des Zielobjekts, das durch globale Anpassung erhalten wurde; und

Erzeugen einer dreidimensionalen Ausdrucksbasis des Zielobjekts auf der Grundlage des Form-Basis-Koeffizienten und des Ausdrucksbasis-Koeffizienten.

5. Vorrichtung zur Erzeugung eines dreidimensionalen Flächenmodells, umfassend:

ein Erfassungsmodul (1510), das so konfiguriert ist, dass es ein eingegebenes dreidimensionales Flächennetz eines Zielobjekts erhält;

ein Verarbeitungsmodul (1520), das so konfiguriert ist, dass es das dreidimensionale Flächennetz mit einem ersten dreidimensionalen Flächenmodell eines Standardobjekts auf der Grundlage von Gesichtspunkten abgleicht; und

ein Anpassungsmodul (1530), das so konfiguriert ist, dass es eine Anpassung an dem dreidimensionalen Flächennetz und einem lokalen Bereich des ersten dreidimensionalen Flächenmodells durchführt, um ein zweites dreidimensionales Flächenmodell durch lokale Anpassung zu erhalten, und eine Anpassung an dem dreidimensionalen Flächennetz und einem globalen Bereich des zweiten dreidimensionalen Flächenmodells durchführt, um ein dreidimensionales Flächenmodell des Zielobjekts durch globale Anpassung zu erhalten,

wobei das Verarbeitungsmodul ferner so konfiguriert ist, dass es eine nicht starre Registrierung an dem dreidimensionalen Flächennetz und dem lokalen Bereich des ersten dreidimensionalen Flächenmodells durchführt, um eine erste Entsprechung zwischen dem lokalen Bereich und dem dreidimensionalen Flächennetz zu erhalten; und

wobei die Vorrichtung ein Berechnungsmodul umfasst, das konfiguriert ist, um: Durchführen einer Anpassung an dem dreidimensionalen Flächennetz und dem lokalen Bereich des ersten dreidimensionalen Flächenmodells auf der Grundlage der ersten Entsprechung, um einen ersten Haltungsparameter des zweiten dreidimensionalen Flächenmodells zu berechnen; Optimieren eines Form-Basiskoeffizienten des ersten dreidimensionalen Flächenmodells auf der Grundlage des ersten Haltungsparameters, um einen Form-Basiskoeffizienten des zweiten dreidimensionalen Flächenmodells zu erhalten; und Optimieren eines Ausdruck-Basiskoeffizienten des ersten dreidimensionalen Flächenmodells auf der Grundlage des ersten Haltungsparameters, um einen Ausdruck-Basiskoeffizienten des zweiten dreidimensionalen Flächenmodells zu erhalten, und wobei

das Anpassungsmodul ferner konfiguriert ist, um auf der Grundlage des ersten Haltungsparameters, des Form-Basiskoeffizienten und des Ausdruck-Basiskoeffizienten das zweite dreidimensionale Flächenmodell durch lokale Anpassung zu erhalten, oder

wobei das Verarbeitungsmodul ferner so konfiguriert ist, dass es eine nicht starre Registrierung an dem dreidimensionalen Flächennetz und der globalen Fläche des zweiten dreidimensionalen Flächenmodells durchführt, um eine zweite Übereinstimmung zwischen der globalen Fläche und dem dreidimensionalen Flächennetz zu erhalten; und

das Anpassungsmodul ist ferner so konfiguriert, dass es eine Anpassung des dreidimensionalen Flächennetzes und der globalen Fläche des zweiten dreidimensionalen Flächenmodells auf der Grundlage der zweiten Korrespondenz durchführt, um das dreidimensionale Flächenmodell des Zielobjekts durch globale Anpassung zu erhalten,

wobei das Erfassungsmodul ferner konfiguriert ist, um einen Fehler des zweiten dreidimensionalen Flächenmodells zu erhalten, wobei der Fehler einem Ausreißer des ersten dreidimensionalen Flächenmodells entspricht und der Ausreißer ein Punkt ist, der nicht zu dem lokalen Bereich des ersten dreidimensionalen Flächenmodells gehört; und

das Verarbeitungsmodul so konfiguriert ist, dass es den Fehler aus dem zweiten dreidimensionalen Flächenmodell herausfiltert, um das zweite dreidimensionale Flächenmodell zu erhalten, das fehlerfrei ist.

6. Vorrichtung nach Anspruch 5, wobei das Berechnungsmodul ferner konfiguriert ist, um: Durchführen einer Anpassung des dreidimensionalen Flächennetzes und der globalen Fläche des zweiten dreidimensionalen Flächenmodells auf der Grundlage der zweiten Korrespondenz, um einen zweiten Haltungsparameter des dreidimensionalen Flächenmodells des Zielobjekts zu berechnen, der durch globale Anpassung erhalten wird; Optimieren eines Form-Basiskoeffizienten des zweiten dreidimensionalen Flächenmodells auf der Basis des zweiten Haltungsparameters, um einen Form-Basiskoeffizienten des dreidimensionalen Flächenmodells des Zielobjekts zu erhalten, der durch globale Anpassung erhalten wird; Optimieren eines Ausdruck-Basiskoeffizienten des zweiten dreidimensionalen Flächenmodells auf der Basis des zweiten Haltungsparameters, um einen Ausdruck-Basiskoeffizienten des dreidimensionalen Flächenmodells des Zielobjekts zu erhalten, der durch globale Anpassung erhalten wird, und wobei

das Anpassungsmodul ist ferner so konfiguriert, dass es auf der Grundlage des zweiten Haltungsparameters, des Form-Basiskoeffizienten und des Ausdruck-Basiskoeffizienten das dreidimensionale Flächenmodell des Zielobjekts durch globale Anpassung erhält.

7. Computervorrichtung, das einen Prozessor und einen Speicher umfasst, wobei
der Speicher so konfiguriert ist, dass er mindestens eine Anweisung, mindestens ein Programmsegment, einen Codesatz oder einen Anweisungssatz speichert, und die Anweisung und das Programm, der Codesatz oder der Anweisungssatz vom Prozessor geladen und ausgeführt werden, um das dreidimensionale Flächenmodellerzeugungsverfahren nach einem der Ansprüche 1 bis 4 durchzuführen.

8. Computerlesbares Speichermedium, das mindestens einen Befehl, mindestens ein Programmsegment, einen Codesatz oder einen Befehlssatz und den mindestens einen Befehl speichert, wobei das mindestens eine Programmsegment, der Codesatz oder der Befehlssatz von einem Prozessor geladen und ausgeführt wird, um das dreidimensionale Flächenmodell-Erzeugungsverfahren nach einem der Ansprüche 1 bis 4 auszuführen.

## Revendications

1. Procédé de génération de modèle facial tridimensionnel, exécutable par un dispositif informatique, le procédé comprenant :

l'obtention (501, 701) d'un maillage facial tridimensionnel entré d'un objet cible ;
l'alignement (502, 702), sur la base de points clés faciaux, du maillage facial tridimensionnel sur un premier modèle facial tridimensionnel d'un objet standard ;
la réalisation d'un ajustement (503) sur le maillage facial tridimensionnel et une surface locale du premier modèle facial tridimensionnel, pour obtenir un deuxième modèle facial tridimensionnel par ajustement local ; et
la réalisation d'un ajustement (504) sur le maillage facial tridimensionnel et une surface globale du deuxième modèle facial tridimensionnel, pour obtenir un modèle facial tridimensionnel de l'objet cible par ajustement global, dans lequel la réalisation de l'ajustement sur le maillage facial tridimensionnel et une surface locale du premier modèle facial tridimensionnel, pour obtenir un deuxième modèle facial tridimensionnel par ajustement local comprend :

la réalisation d'une superposition non rigide (703) sur le maillage facial tridimensionnel et la surface locale du premier modèle facial tridimensionnel, pour obtenir une première correspondance entre la surface locale et le maillage facial tridimensionnel ;
la réalisation d'un ajustement (7041) sur le maillage facial tridimensionnel et la surface locale du premier modèle facial tridimensionnel sur la base de la première correspondance, pour calculer un premier paramètre de pose du deuxième modèle facial tridimensionnel ;
l'optimisation (7042) d'un coefficient de base de forme du premier modèle facial tridimensionnel sur la base du premier paramètre de pose, pour obtenir un coefficient de base de forme du deuxième modèle facial tridimensionnel ;
l'optimisation (7043) d'un coefficient de base d'expression du premier modèle facial tridimensionnel sur la base du premier paramètre de pose, pour obtenir un coefficient de base d'expression du deuxième modèle facial tridimensionnel ; et
l'obtention (7044), sur la base du premier paramètre de pose, du coefficient de base de forme et du coefficient de base d'expression, du deuxième modèle facial tridimensionnel par ajustement local, ou
dans lequel la réalisation de l'ajustement sur le maillage facial tridimensionnel et une surface globale du deuxième modèle facial tridimensionnel, pour obtenir un modèle facial tridimensionnel de l'objet cible par ajustement global comprend :

la réalisation d'une superposition non rigide (705) sur le maillage facial tridimensionnel et la surface globale du deuxième modèle facial tridimensionnel, pour obtenir une deuxième correspondance entre la surface globale et le maillage facial tridimensionnel ;
l'obtention d'un défaut du deuxième modèle facial tridimensionnel, dans lequel le défaut correspond à une observation aberrante du premier modèle facial tridimensionnel, et l'observation aberrante est un point qui n'appartient pas à la surface locale du premier modèle facial tridimensionnel ;
l'élimination du défaut du deuxième modèle facial tridimensionnel, pour obtenir le deuxième modèle facial tridimensionnel qui est sans défaut ; et
la réalisation de l'ajustement sur le maillage facial tridimensionnel et la surface globale du deuxième modèle facial tridimensionnel sur la base de la deuxième correspondance, pour obtenir le modèle facial tridimensionnel de l'objet cible par ajustement global.

2. Procédé selon la revendication 1, dans lequel la réalisation de l'ajustement sur le maillage facial tridimensionnel et la surface globale du deuxième modèle facial tridimensionnel sur la base de la deuxième correspondance, pour obtenir le modèle facial tridimensionnel de l'objet cible par ajustement global comprend :

la réalisation d'un ajustement (7061) sur le maillage facial tridimensionnel et la surface globale du deuxième modèle facial tridimensionnel sur la base de la deuxième correspondance, pour calculer un deuxième paramètre de pose du modèle facial tridimensionnel de l'objet cible obtenu par ajustement global ;
l'optimisation (7062) d'un coefficient de base de forme du deuxième modèle facial tridimensionnel sur la base du deuxième paramètre de pose, pour obtenir un coefficient de base de forme du modèle facial tridimensionnel de l'objet cible obtenu par ajustement global ;
l'optimisation (7063) d'un coefficient de base d'expression du deuxième modèle facial tridimensionnel sur la base du deuxième paramètre de pose, pour obtenir un coefficient de base d'expression du modèle facial tridimensionnel de l'objet cible obtenu par ajustement global ; et
l'obtention (7064), sur la base du deuxième paramètre de pose, du coefficient de base de forme et du coefficient de base d'expression, du modèle facial tridimensionnel de l'objet cible par ajustement global.

3. Procédé selon la revendication 1, dans lequel l'obtention d'un défaut du deuxième modèle facial tridimensionnel comprend :

la comparaison d'une norme de la surface globale du deuxième modèle facial tridimensionnel à une norme du deuxième modèle facial tridimensionnel obtenu par ajustement local, pour obtenir une différence de normes ; et
la détermination du défaut du deuxième modèle facial tridimensionnel sur la base de la différence de normes.

4. Procédé selon l'une quelconque des revendications 1 à 3, dans lequel le procédé comprend en outre :

l'obtention d'un coefficient de base de forme et d'un coefficient de base d'expression du modèle facial tridimensionnel de l'objet cible obtenu par ajustement global ; et
la génération d'une base d'expression tridimensionnelle de l'objet cible sur la base du coefficient de base de forme et du coefficient de base d'expression.

5. Appareil de génération de modèle facial tridimensionnel, comprenant :

un module d'obtention (1510), configuré pour obtenir un maillage facial tridimensionnel entré d'un objet cible ;
un module de traitement (1520), configuré pour aligner le maillage facial tridimensionnel sur un premier modèle facial tridimensionnel d'un objet standard sur la base de points clés faciaux ; et
un module d'ajustement (1530), configuré pour réaliser un ajustement sur le maillage facial tridimensionnel et une surface locale du premier modèle facial tridimensionnel, pour obtenir un deuxième modèle facial tridimensionnel par ajustement local, et réaliser un ajustement sur le maillage facial tridimensionnel et une surface globale du deuxième modèle facial tridimensionnel, pour obtenir un modèle facial tridimensionnel de l'objet cible par ajustement global,
dans lequel le module de traitement est en outre configuré pour réaliser une superposition non rigide sur le maillage facial tridimensionnel et la surface locale du premier modèle facial tridimensionnel, pour obtenir une première correspondance entre la surface locale et le maillage facial tridimensionnel ; et
dans lequel l'appareil comprend un module de calcul, configuré pour : réaliser un ajustement sur le maillage facial tridimensionnel et la surface locale du premier modèle facial tridimensionnel sur la base de la première correspondance, pour calculer un premier paramètre de pose du deuxième modèle facial tridimensionnel ;
optimiser un coefficient de base de forme du premier modèle facial tridimensionnel sur la base du premier paramètre de pose, pour obtenir un coefficient de base de forme du deuxième modèle facial tridimensionnel ;
et optimiser un coefficient de base d'expression du premier modèle facial tridimensionnel sur la base du premier paramètre de pose, pour obtenir un coefficient de base d'expression du deuxième modèle facial tridimensionnel, et dans lequel
le module d'ajustement est en outre configuré pour obtenir, sur la base du premier paramètre de pose, du coefficient de base de forme et du coefficient de base d'expression, le deuxième modèle facial tridimensionnel par ajustement local, ou
dans lequel le module de traitement est en outre configuré pour réaliser une superposition non rigide sur le maillage facial tridimensionnel et la surface globale du deuxième modèle facial tridimensionnel, pour obtenir une deuxième correspondance entre la surface globale et le maillage facial tridimensionnel ; et

le module d'ajustement est en outre configuré pour réaliser un ajustement sur le maillage facial tridimensionnel et la surface globale du deuxième modèle facial tridimensionnel sur la base de la deuxième correspondance, pour obtenir le modèle facial tridimensionnel de l'objet cible par ajustement global,

dans lequel le module d'obtention est en outre configuré pour obtenir un défaut du deuxième modèle facial tridimensionnel, dans lequel le défaut correspond à une observation aberrante du premier modèle facial tridimensionnel, et l'observation aberrante est un point qui n'appartient pas à la surface locale du premier modèle facial tridimensionnel ; et

le module de traitement est configuré pour éliminer le défaut du deuxième modèle facial tridimensionnel, pour obtenir le deuxième modèle facial tridimensionnel qui est sans défaut.

6. Appareil selon la revendication 5, dans lequel le module de calcul est en outre configuré pour : réaliser un ajustement sur le maillage facial tridimensionnel et la surface globale du deuxième modèle facial tridimensionnel sur la base de la deuxième correspondance, pour calculer un deuxième paramètre de pose du modèle facial tridimensionnel de l'objet cible obtenu par ajustement global ; optimiser un coefficient de base de forme du deuxième modèle facial tridimensionnel sur la base du deuxième paramètre de pose, pour obtenir un coefficient de base de forme du modèle facial tridimensionnel de l'objet cible obtenu par ajustement global ; optimiser un coefficient de base d'expression du deuxième modèle facial tridimensionnel sur la base du deuxième paramètre de pose, pour obtenir un coefficient de base d'expression du modèle facial tridimensionnel de l'objet cible obtenu par ajustement global, et dans lequel le module d'ajustement est en outre configuré pour obtenir, sur la base du deuxième paramètre de pose, du coefficient de base de forme et du coefficient de base d'expression, le modèle facial tridimensionnel de l'objet cible par ajustement global.

7. Dispositif informatique, comprenant un processeur et une mémoire, dans lequel la mémoire est configurée pour stocker au moins une instruction, au moins un segment de programme, un jeu d'éléments de code ou un jeu d'instructions, et l'instruction, et le programme, le jeu d'éléments de code ou le jeu d'instructions sont chargés et exécutés par le processeur pour réaliser le procédé de génération de modèle facial tridimensionnel selon l'une quelconque des revendications 1 à 4.

8. Support de stockage lisible par ordinateur, stockant au moins une instruction, au moins un segment de programme, un jeu d'éléments de code ou un jeu d'instructions, et l'au moins une instruction, dans lequel l'au moins un segment de programme, le jeu d'éléments de code ou le jeu d'instructions sont chargés et exécutés par un processeur pour réaliser le procédé de génération de modèle facial tridimensionnel selon l'une quelconque des revendications 1 à 4.

n columns

m
rows

10

**FIG. 1**

20

**FIG. 2**

301: Data alignment

302: Perform non-rigid registration on a local area

303: Perform fitting on a local area of a three-dimensional face mesh

304: Perform non-rigid registration on a global area

305: Perform fitting on a global area of a three-dimensional face mesh

306: Generate a three-dimensional face model

307: Generate a three-dimensional expression base

FIG. 3

(a)

(b)

41

FIG. 4

Obtain an inputted three-dimensional face mesh of a target object    501

Align the three-dimensional face mesh with a first three-dimensional face model of a standard object based on face keypoints    502

Perform fitting on the three-dimensional face mesh and a local area of the first three-dimensional face model, to obtain a second three-dimensional face model by local fitting    503

Perform fitting on the three-dimensional face mesh and a global area of the second three-dimensional face model, to obtain a three-dimensional face model of the target object by global fitting    504

FIG. 5

FIG. 6

Obtain an inputted three-dimensional face mesh of a target object ⌇⌇701

Align the three-dimensional face mesh with a first three-dimensional face model of a standard object based on face keypoints ⌇⌇702

Perform non-rigid registration on the three-dimensional face mesh and the local area of the first three-dimensional face model, to obtain a first correspondence between the local area and the three-dimensional face mesh ⌇⌇703

Perform fitting on the three-dimensional face mesh and the local area of the first three-dimensional face model based on the first correspondence, to obtain the second three-dimensional face model by local fitting ⌇⌇704

Perform non-rigid registration on the three-dimensional face mesh and the global area of the second three-dimensional face model, to obtain a second correspondence between the global area and the three-dimensional face mesh ⌇⌇705

Perform fitting on the three-dimensional face mesh and the global area of the second three-dimensional face model based on the second correspondence, to obtain the three-dimensional face model of the target object by global fitting ⌇⌇706

FIG. 7

80

81

(a)

(b)

FIG. 8

(a)

(b)

(c)

FIG. 9

Obtain an inputted three-dimensional face mesh of a target object _701_

Align the three-dimensional face mesh with a first three-dimensional face model of a standard object based on face keypoints _702_

Perform non-rigid registration on the three-dimensional face mesh and the local area of the first three-dimensional face model, to obtain a first correspondence between the local area and the three-dimensional face mesh _703_

Perform fitting on the three-dimensional face mesh and the local area of the first three-dimensional face model based on the first correspondence, to calculate a first posture parameter of the second three-dimensional face model _7041_

Optimize a shape base coefficient of the first three-dimensional face model based on the first posture parameter, to obtain a shape base coefficient of the second three-dimensional face model _7042_

Optimize an expression base coefficient of the first three-dimensional face model based on the first posture parameter, to obtain an expression base coefficient of the second three-dimensional face model _7043_

Obtain, based on the first posture parameter, the shape base coefficient, and the expression base coefficient, the second three-dimensional face model by local fitting _7044_

Perform non-rigid registration on the three-dimensional face mesh and the global area of the second three-dimensional face model, to obtain a second correspondence between the global area and the three-dimensional face mesh _705_

Perform fitting on the three-dimensional face mesh and the global area of the second three-dimensional face model based on the second correspondence, to calculate a second posture parameter of the three-dimensional face model of the target object by global fitting _7061_

Optimize a shape base coefficient of the second three-dimensional face model based on the second posture parameter, to obtain a shape base coefficient of the three-dimensional face model of the target object by global fitting _7062_

Optimize an expression base coefficient of the second three-dimensional face model based on the second posture parameter, to obtain an expression base coefficient of the three-dimensional face model of the target object by global fitting _7063_

Obtain, based on the second posture parameter, the shape base coefficient, and the expression base coefficient, the three-dimensional face model of the target object by global fitting _7064_

FIG. 10

101

102

(a)                    (b)

FIG. 11

110

111

FIG. 12

FIG. 13

| | |
|---|---|
| Align a three-dimensional face mesh with a first three-dimensional face model | 1301 |

↓

| | |
|---|---|
| Perform non-rigid registration on the three-dimensional face mesh and the local area of the first three-dimensional face model | 1302 |

↓

| | |
|---|---|
| Perform fitting on the three-dimensional face mesh and a local area of the first three-dimensional face model, to obtain a second three-dimensional face model by local fitting | 1303 |

↓

| | |
|---|---|
| Perform non-rigid registration on the three-dimensional face mesh and a global area of the second three-dimensional face model by local fitting | 1304 |

↓

| | |
|---|---|
| Perform fitting on the three-dimensional face mesh and a global area of the second three-dimensional face model, to obtain a three-dimensional face model of the target object by global fitting | 1305 |

↓

| | |
|---|---|
| Generate a group of three-dimensional expression bases based on the three-dimensional face model of the target object by global fitting | 1306 |

FIG. 14

1401

Determine to-be-played voice information and an expression sequence corresponding to the voice information, where the expression sequence includes at least one expression

1402

For each expression in the expression sequence, generate a three-dimensional face model of a target object based on an expression base of the target object and an expression coefficient that corresponds to each expression

1403

Play the voice information

1404

In a process of playing the voice information, sequentially display three-dimensional face models for expressions based on an order of the expressions included in the expression sequence

FIG. 15

Obtaining module
1510

Processing module
1520

Fitting module 1530

Calculating module
1540

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911296472

**Non-patent literature cited in the description**

- **DAI HANG et al.** *Statistical Modeling of Craniofacial Shape and Texture*